# EUROPEAN PATENT APPLICATION

(11) **EP 4 718 683 A1**
(43) Date of publication of application: **01.04.2026**
(21) Application number: 25202561.4
(22) Date of filing: 16.09.2025
(51) Int. Cl.: H02J 7/70

(54) **BATTERY CHARGER**

(30) Priority: 19.09.2024 JP 2024162022
(71) Applicant: Makita Corporation, Anjo-shi Aichi 446-8502 (JP)
(72) Inventor: TAGA, Hideyuki, Anjo-shi, Aichi 446-8502 (JP)
(74) Representative: Kramer Barske Schmidtchen Patentanwälte PartG mbB

(57) **Abstract**

Problem

To provide techniques for realizing a charger in which it can be easily determined whether or not it is compatible with other chargers.

Solution

A charger (6) includes a housing (204) on which a battery pack (4) is mountable by slidably receiving the battery pack in a first direction (D1); and a plurality of device-side terminals (8), each having a sheet-shaped structure that extends parallel to the first direction and extends parallel to a second direction (D2) that extends from the battery pack toward the housing, and respectively engaging with battery-side terminals (12) of the battery pack that has been mounted on the housing. The device-side terminals include two charging terminals (256, 258) for charging the battery pack from the charger; and two signal terminals (262f, 262s) for signal communication between the charger and the battery pack. The two charging terminals are spaced apart from each other in a third direction (D3) that is orthogonal to the first direction and the second direction. Each of the two signal terminals is disposed on one side (SL) of a space between the two charging terminals that is divided by a virtual plane (P2) that bisects the space in the third direction.

## Description

### TECHNICAL FIELD

The techniques disclosed in the present specification relate to a battery charger, which may be used, e.g., to recharge a battery pack for a power tool.

### BACKGROUND ART

In US 2011-181243, a battery charger is disclosed that detachably mounts a battery pack that comprises battery-side terminals. The battery charger includes a housing, on which the battery pack is mounted by receiving the battery pack in a slidable manner in a prescribed first direction, and a plurality of device-side terminals, each of which is (extends) parallel to the first direction and parallel to a second direction that faces from the battery pack toward the housing when the battery pack is mounted on the battery charger, and that respectively engage with the battery-side terminals of the battery pack mounted on the housing. The device-side terminals include two charging terminals for supplying charging current to the battery pack from the charger and three signal terminals for signal communication between the charger and the battery pack. The two charging terminals are spaced apart from each other in a third direction that is orthogonal to the first direction and the second direction. Each of the three signal terminals is disposed between the two charging terminals. The plurality of device-side terminals are arranged at substantially equal intervals in the third direction.

### SUMMARY OF THE INVENTION

There are situations in which a user of a battery charger needs to determine whether the charger, which the user is using, is compatible with other chargers. In such situations, it is desirable for the user to be able to easily determine whether the battery charger is compatible with other chargers. It is therefore one non-limiting object of the present teachings to disclose techniques for realizing a charger that can be easily determined (preferably, visually) whether or it is compatible with other chargers.

This object is achieved by the battery charger of claim 1. Further developments of the invention are recited in the dependent claims.

In one non-limiting aspect of the present teachings, a battery charger (hereinafter, simply "charger") is capable of detachably mounting a battery pack having battery-side terminals. The charger comprises a housing on which the battery pack can be mounted by slidably receiving the battery pack in a prescribed first direction; and a plurality of device-side terminals, each having a sheet-shaped structure that is (extends) parallel to the first direction and is (extends) parallel to a second direction that extends from the battery pack toward the housing (when the battery pack is mounted on the charger, and respectively engaging (being configured to engage) with battery-side terminals of the battery pack that has been mounted on the housing. The device-side terminals include two charging terminals for charging the battery pack from the charger (i.e. adapted/configured to supply a relatively large charging current output by the charger to the battery pack); and two signal terminals for signal communication between the charger and the battery pack (i.e. for conducting relatively low-current electric control signals therebetween). The two charging terminals are spaced apart from each other in a third direction that is orthogonal to the first direction and the second direction. Each of the two signal terminals is disposed on one side of a space between the two charging terminals that is divided by a virtual plane that bisects the space in the third direction.

Chargers, which have a plurality of device-side terminals arranged at approximately equal intervals, are generally available such as the one disclosed in US 2011-181243. On the other hand, according to the above-described configuration according to the present teachings, the two signal terminals are disposed near one of the charging terminals. The other charging terminal is disposed at a position remote (spaced apart) from the other device-side terminals (i.e., from the one charging terminal and the two signal terminals). Therefore, the layout of the device-side terminals clearly differs from the layout of the device-side terminals of generally available chargers (i.e., chargers, which have a plurality of device-side terminals arranged at approximately equal intervals). Thereby, the lack of compatibility between a charger of the present teachings and a generally available charger is visually ascertainable from the differences in their appearances (i.e., the arrangement of the device-side terminals). Therefore, according to the above-mentioned configuration, a charger, in which it can be easily determined whether it is compatible with other chargers, can be realized.

### BRIEF DESCRIPTION OF THE DRAWINGS

FIG. 1 shows a charging system 2 according to a working example of the present teachings, in a state in which a battery pack 4 has been removed from a charger 6.
FIG. 2 shows the charging system 2 according to the working example, in a state in which the battery pack 4 has been mounted on the charger 6.
FIG. 3 shows a power tool system according to the working example, in a state in which the battery pack 4 has been removed from an electric work machine 16.
FIG. 4 shows the power tool system according to the working example, in a state in which the battery pack 4 has been mounted on the electric work machine 16.
FIG. 5 is an exploded view of the battery pack 4 according to the working example.
FIG. 6 shows a battery module 22 of the battery pack 4 according to the working example as viewed from the front, above, and right.
FIG. 7 shows the battery module 22 of the battery pack 4 according to the working example as viewed from the rear, below, and left.
FIG. 8 is an oblique view of a battery-side terminal 12 of the battery pack 4 according to the working example.
FIG. 9 shows the battery module 22 of the battery pack 4 according to the working example as viewed from above.
FIG. 10 shows an upper-part case 26 of the battery pack 4 according to the working example as viewed from the rear, above, and right.
FIG. 11 shows the battery pack 4 according to the working example as viewed from above.
FIG. 12 shows the upper-part case 26 of the battery pack 4 according to the working example as viewed from the front, below, and right.
FIG. 13 is an exploded view of the charger 6 according to the working example.
FIG. 14 shows a cross section, orthogonal to the front-rear direction, of the charger 6 according to the working example as viewed from the rear.
FIG. 15 is an enlarged view of area EA indicated in FIG. 14.
FIG. 16 is an oblique view of a connection terminal 228 of the charger 6 according to the working example.
FIG. 17 shows an upper surface of the charger 6 according to the working example as viewed along (from) a direction orthogonal to a terminal-mounting surface 10 (i.e., in second direction D2).
FIG. 18 shows battery-side terminals 12 and device-side terminals 8 respectively engaging with each other during the process of mounting the battery pack 4 on the charger 6 according to the working example.
FIG. 19 shows the positional relationship between the battery-side terminals 12 and the device-side terminals 8 when the battery pack 4 has been mounted on the charger 6 according to the working example.
FIG. 20 schematically shows an electrical circuit formed between the battery pack 4 and the charger 6 when the battery pack 4 has been mounted on the charger 6 according to the working example.
FIG. 21 shows the positional relationship between the battery-side terminal 12 and device-side terminals 18 when the battery pack 4 has been mounted on the electric work machine 16 according to the working example.
FIG. 22 schematically shows an electrical circuit formed between the battery pack 4 and the electric work machine 16 when the battery pack 4 has been mounted on the electric work machine 16 according to the working example.

### DETAILED DESCRIPTION OF THE INVENTION

Representative, non-limiting specific examples of the present invention are described below in detail, with reference to the drawings. This detailed description is merely intended to teach persons skilled in the art details for implementing preferable examples of the present invention and are not intended to limit the scope of the present invention. In addition, the additional features and inventions disclosed herein can also be used separately from, or in conjunction with, other features and inventions to provide additional improved battery packs and methods of manufacturing and using the same.

In addition, the combinations of features and processes disclosed in the detailed description below are not essential when implementing the present invention in the broadest possible sense and are described only for the purpose of explaining representative specific examples of the present invention in detail. Moreover, when providing additional, useful embodiments of the present teachings, various features of the following representative specific examples, as well as the various features set forth in the claims, need not accord with the specific examples described herein nor be combined in the order enumerated.

Separately from the configurations of the features described in the working example and/or the claims, all the features described in the present specification and/or in the claims are intended to be disclosed individually and mutually independently as limitations on the specific matters recited in the disclosure and the claims of the original application. Moreover, the descriptions relating to all numerical ranges and groupings or categories are intended to disclose all intermediate configurations as possible limitations of the specific matters recited in the disclosure and the claims of the original application.

In one or more embodiments, the locations of the end portions of each of the two charging terminals in a fourth direction may be aligned in the fourth direction that is opposite to the first direction. The locations of the end portions of each of the two signal terminals in the fourth direction may be offset in one of the first direction and the fourth direction from the locations of the end portions of each of the two charging terminals in the fourth direction.

According to the above-mentioned configuration, the locations of the two signal terminals are offset in the first direction (or fourth direction) relative to the locations of the two charging terminals. As a result, it becomes easier for the user to visually distinguish between the signal terminals and the charging terminals.

In one or more embodiments, the locations of the end portions of each of the two signal terminals in the fourth direction may be offset in the fourth direction relative to the locations of each of the end portions of the two charging terminals in the fourth direction.

According to the above-mentioned configuration, the locations of the two signal terminals are offset in the fourth direction relative to the locations of the two charging terminals. As a result, it becomes easier for the user to visually distinguish between the signal terminals and the charging terminals.

In one or more embodiments, the housing may include a terminal-mounting surface on which the device-side terminals are provided and which opposes the battery pack mounted on the housing; and a plurality of protruding portions that protrude from the terminal-mounting surface toward the battery pack (i.e. when the battery pack is mounted on the charger). Each of the two charging terminals may protrude toward the battery pack from the portion(s) of the terminal-mounting surface where the protruding portions are provided. Each of the two signal terminals may protrude toward the battery pack from the portion(s) of the terminal-mounting surface where the protruding portions are not provided.

According to the above-mentioned configuration, terminals that protrude from the portions of the terminal mounting surface where the protruding portions are provided can be identified as charging terminals, and terminals that protrude from the portions of the terminal mounting surface where the protruding portions are not provided can be identified as signal terminals. As a result, it becomes easier for the user to visually distinguish between signal terminals and charging terminals.

In one or more embodiments, the housing may again include a terminal-mounting surface on which the device-side terminals are provided and which opposes the battery pack mounted on the housing; and a plurality of protruding portions that protrude from the terminal-mounting surface toward the battery pack (i.e. when the battery pack is mounted on the charger). Each of the two signal terminals may protrude toward the battery pack from the portion(s) of the terminal-mounting surface where the protruding portions are not provided. At least one of the protruding portions may be arranged such that it does not contact any one of device-side terminals on the opposite side of the space divided by the virtual plane.

According to the above-mentioned configuration, battery packs having recessed portions corresponding to the protruding portions can be mounted on the charger. On the other hand, if it is attempted to mount a battery pack that does not have recessed portions corresponding to the protruding portions on the charger, the battery pack cannot be mounted the charger because the protruding portions interfere with (block) the battery pack. Thereby, battery packs, which are not suitable for being recharged by the charger, are impeded (blocked) from being mounted on the charger.

Another charger disclosed herein may be a charger that is capable of detachably mounting a battery pack having battery-side terminals. The charger may comprise the housing on which the battery pack can be mounted by slidably receiving the battery pack in the prescribed first direction; and the plurality of device-side terminals, each having a sheet-shaped structure that is (extends) parallel to the first direction and is (extends) parallel to the second direction that extends from the battery pack toward the housing, and respectively engaging (configured to engage) with the battery-side terminals of the battery pack that has been mounted on the housing. As was explained above, the device-side terminals may again include the two charging terminals for charging the battery pack from the charger; and the two signal terminals for signal communication between the charger and the battery pack. The housing may also include the terminal-mounting surface on which the device-side terminals are provided and which opposes the battery pack mounted on the housing (i.e. when the battery pack is mounted on the charger); and the plurality of protruding portions that protrude from the terminal-mounting surface toward the battery pack. Each of the two charging terminals may protrude toward the battery pack from the portion(s) of the terminal-mounting surface where the protruding portions are provided. Each of the two signal terminals may protrude toward the battery pack from the portion(s) of the terminal-mounting surface where the protruding portions are not provided.

According to the above-mentioned configuration, the terminals that protrude from the portions of the terminal mounting surface where the protruding portions are provided can be identified as charging terminals, and the terminals that protrude from the portions of the terminal mounting surface where the protruding portions are not provided can be identified as signal terminals. As a result, it becomes easier for the user to visually distinguish between the signal terminals and the charging terminals.

Another charger disclosed herein may be a charger that is capable of detachably mounting a battery pack having battery-side terminals. The charger may again comprise the housing on which the battery pack can be mounted by slidably receiving the battery pack in the prescribed first direction; and the plurality of device-side terminals, each having a sheet-shaped structure that is (extends) parallel to the first direction and is (extends) parallel to a second direction that extends from the battery pack toward the housing, and respectively engaging (configured to engage) with the battery-side terminals of the battery pack that has been mounted on the housing. As was explained above, the device-side terminals may include the two charging terminals for charging the battery pack from the charger; and the two signal terminals for signal communication between the charger and the battery pack. The housing may also include the terminal-mounting surface on which the device-side terminals are provided and which opposes the battery pack mounted on the housing; and the plurality of protruding portions that protrude from the terminal-mounting surface toward the battery pack. Each of the two signal terminals may protrude toward the battery pack from the portion(s) of the terminal-mounting surface where the protruding portions are not provided. At least one of the protruding portions may be arranged such that it does not contact any one of device-side terminals.

According to the above-mentioned configuration, battery packs having recessed portions corresponding to the protruding portions can be mounted on the charger. On the other hand, if it is attempted to mount a battery pack that does not have recessed portions corresponding to the protruding portions on the charger, the battery pack cannot be mounted the charger because the protruding portions interfere with (block) the battery pack. Thereby, battery packs, which are not suitable for being recharged by the charger, are impeded from (blocked) being mounted on the charger.

### Working Example: Charging System 2

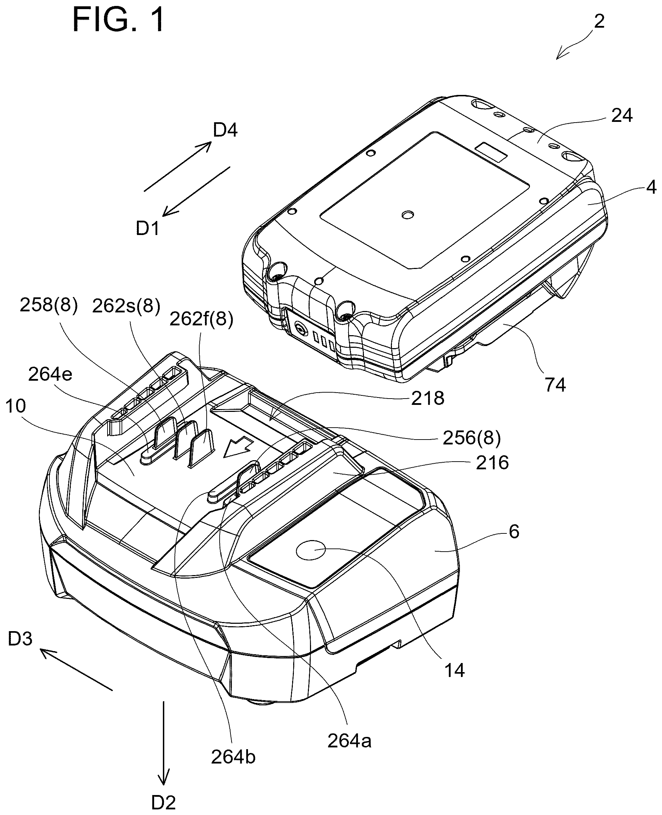

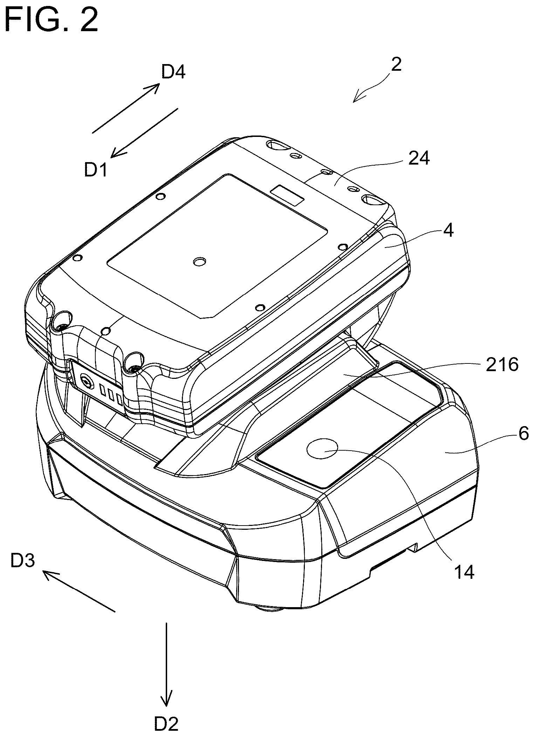

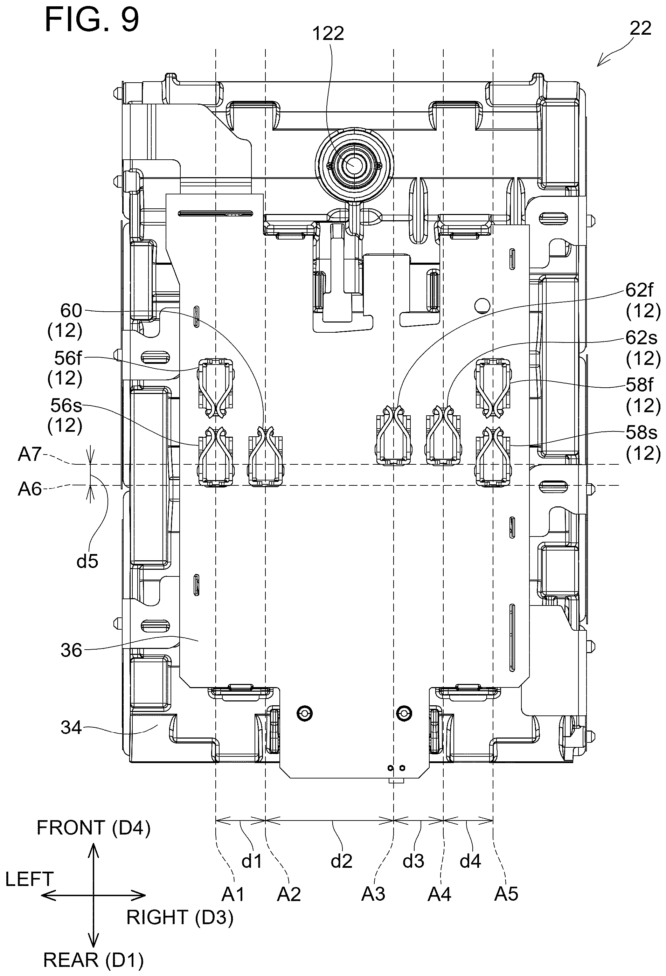

As shown in FIG. 1 and FIG. 2, a charging system 2 according to the present teachings comprises a battery pack 4 and a charger 6 that charges the battery pack 4. The charger 6 has a terminal-mounting surface 10, from which sheet-shaped (rib-shaped, fin-shaped), device-side terminals 8 protrude (perpendicular to the terminal-mounting surface 10). The battery pack 4 is mountable on the charger 6 by sliding the battery pack 4 in a first direction D1 parallel to the terminal-mounting surface 10. By mounting the battery pack 4 on the charger 6, the device-side terminals 8 respectively engage with battery-side terminals 12 of the battery pack 4 (see FIG. 9) to enable charging (conduction of charging (i.e. relatively large) current) from the charger 6 to the battery pack 4. The battery pack 4 mounted on the charger 6 is removed from the charger 6 by sliding the battery pack 4 in a fourth direction D4 that is opposite of the (first) direction when the battery pack 4 is being mounted on the charger 6. In addition, the charger 6 comprises an indicator part (a display or an illumination device, such as one or more LEDs) 14, which indicates the charging state (status) of the battery pack 4 (for example, whether or not the battery pack 4 is currently charging).

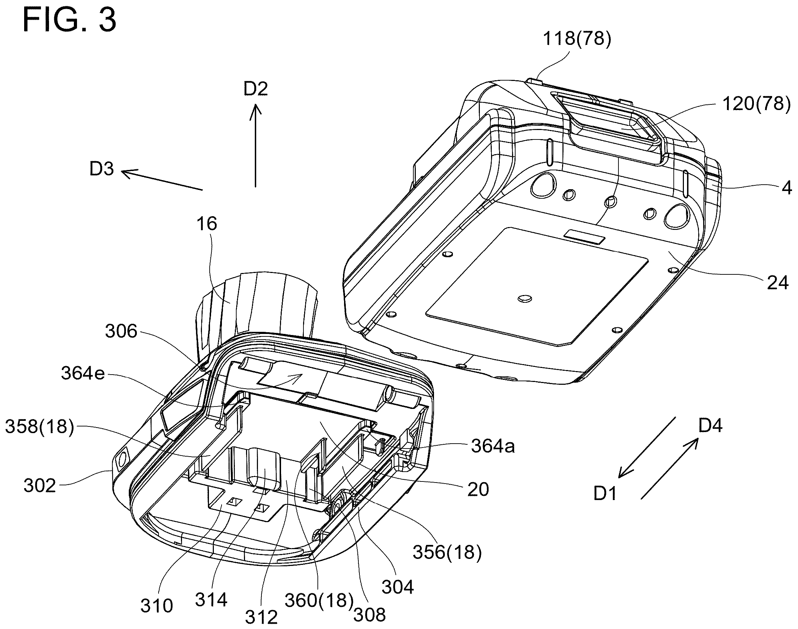

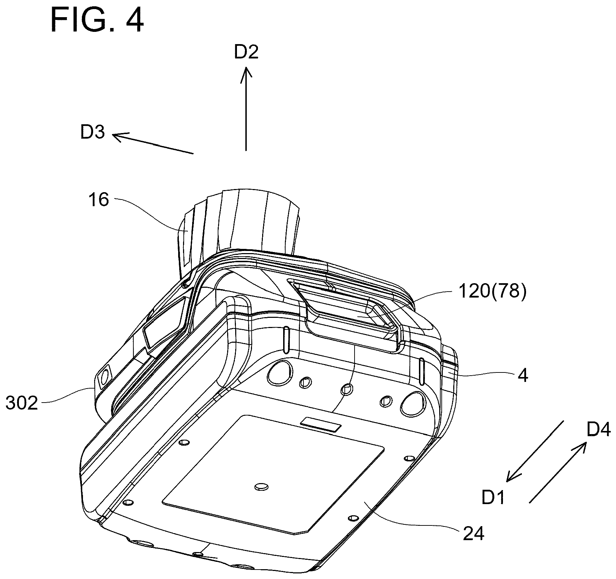

As shown in FIG. 3 and FIG. 4, the battery pack 4 is mountable on an electric work machine 16 (partially shown) in a detachable manner to function as a power source that supplies power to the electric work machine 16. The electric work machine 16 may be, for example and without limitation, an electric drill, an electric grinder, an electric circular saw, an electric chain saw, an electric reciprocating saw, an electric lawnmower, an electric brush cutter, or an electric blower. The electric work machine 16 has a terminal-mounting surface 20, from which sheet-shaped (rib-shaped, fin-shaped), device-side terminals 18 protrude (perpendicular to the terminal-mounting surface 10). The battery pack 4 is mounted on the electric work machine 16 by sliding the battery pack 4 in first direction D1 that is parallel to the terminal-mounting surface 20. By mounting the battery pack 4 on the electric work machine 16, the device-side terminals 18 respectively engage with the battery-side terminals 12 of the battery pack 4 (see FIG. 9) to enable discharging (conduction of drive (i.e. relatively large) current) from the battery pack 4 to the electric work machine 16. The battery pack 4 mounted on the electric work machine 16 is removed from the electric work machine 16 by sliding the battery pack 4 in a fourth direction D4 that is opposite of the (first) direction when the battery pack 4 is being mounted on the electric work machine 16.

In the present working example, the direction in which the battery pack 4 is slid when mounting the battery pack 4 on the charger 6 (or the electric work machine 16) is defined as the above-mentioned first direction D1. In addition, a direction that is orthogonal to first direction D1 and is the direction from the battery pack 4 toward the terminal-mounting surface 10 of the charger 6 (or the terminal-mounting surface 20 of the electric work machine 16) when the battery pack 4 is mounted on the charger 6 or the electric work machine 16 is defined as second direction D2. In addition, a direction that is orthogonal to first direction D1 and second direction D2 and is the direction in which the battery pack 4 is located, as viewed from the indicator part 14 when the battery pack 4 has been mounted on the charger 6, is defined as third direction D3. In addition, the (colinear) direction opposite to first direction D1 is defined as the above-mentioned fourth direction D4. As was explained above, fourth direction D4 is the direction in which the battery pack 4 is slid when removing the battery pack 4 from the charger 6 (or the electric work machine 16).

### Configuration of Battery Pack 4

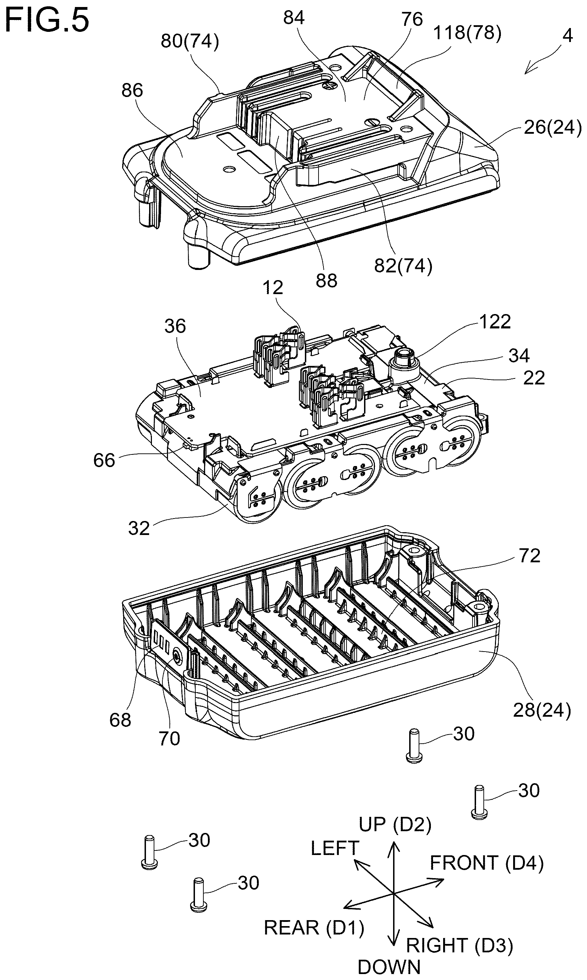

First, the description will focus on the battery pack 4. Here, the front, rear, up, down, left, and right directions are defined with reference to the battery pack 4. Specifically, a direction that coincides with first direction D1 described above (i.e., the direction in which the battery pack 4 is slid when mounting the battery pack 4 on the charger 6 or the electric work machine 16) is defined as the rear direction of the battery pack 4. A direction that coincides with fourth direction D4 described above (i.e., the direction in which the battery pack 4 is slid when removing the battery pack 4 from the charger 6 or the electric work machine 16) is defined as the front direction of the battery pack 4. A direction that coincides with second direction D2 described above (i.e., a direction that is orthogonal to first direction D1 and is the direction from the battery pack 4 toward the terminal-mounting surface 10 or the terminal-mounting surface 20) is defined as the up direction of the battery pack 4. The direction opposite to the up direction of the battery pack 4 is defined as the down direction of the battery pack 4. A direction that coincides with third direction D3 described above (i.e., a direction that is orthogonal to first direction D1 and second direction D2 and is the direction in which the battery pack 4 is located as viewed from the indicator part 14) is defined as the right direction of the battery pack 4. The direction opposite to the right direction of the battery pack 4 is defined as the left direction of the battery pack 4. In FIGS. 5-12, which illustrate only the battery pack 4, the front, rear, up, down, left, and right directions are illustrated with reference to the battery pack 4.

As shown in FIG. 5, the battery pack 4 comprises a battery module 22 and an outer case 24, which houses the battery module 22. The outer case 24 has a substantially rectangular-parallelepiped shape that defines a front surface, a rear surface, an upper surface, a lower surface, a left surface, and a right surface. The outer case 24 is divided into an upper-part case 26 and a lower-part case 28. The upper-part case 26 and the lower-part case 28 are affixed to each other by four screws 30.

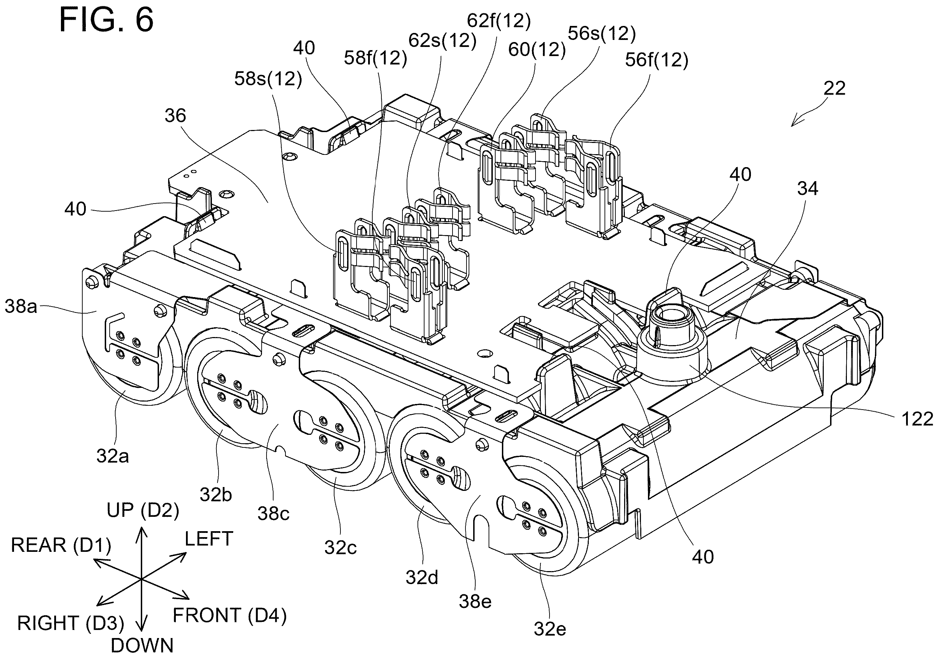

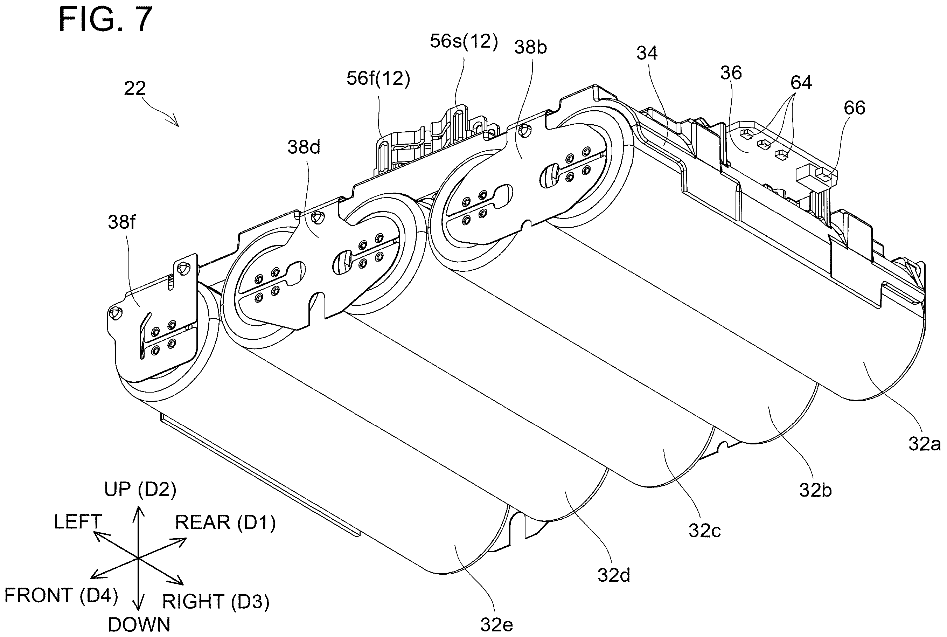

As shown in FIG. 6 and FIG. 7, the battery module 22 comprises five battery cells 32, a cell cover 34, and a circuit board 36. Each of the battery cells 32 is a circularcylindrical-shaped secondary-battery cell, e.g., a lithium-ion battery cell, in which a positive electrode is formed at one end and a negative electrode is formed at the other end. The rated voltage of each of the battery cells 32 is, for example, 3.6 V. In addition, a material having electrical insulating properties, e.g., a plastic, is used as (to form) the cell cover 34. The cell cover 34 covers the five battery cells 32 from above. The lower surface of the cell cover 34 has a shape that conforms to the outer-circumferential surfaces of the battery cells 32. The battery cells 32 are positioned by abutting the lower surface of the cell cover 34 on the battery cells 32. The battery cells 32 are disposed such that the longitudinal directions thereof lie along the left-right direction, and the battery cells 32 that are adjacent to each other are arrayed in the front-rear direction. In addition, the battery cells 32 are disposed such that, for any two of the battery cells 32 that are adjacent to each other in the front-rear direction, the direction from the positive electrode to the negative electrode of one of the battery cells 32 is opposite to other of the battery cells 32.

Lead plates 38a, 38b, 38c, 38d, 38e, 38f made of metal are mounted on the left-side surface and the right-side surface of the cell cover 34. The lead plates 38a, 38b, 38c, 38d, 38e, 38f are disposed spaced apart from each other so as to be electrically insulated (isolated) from each other. The lead plate 38a shown in FIG. 6 is connected to the negative electrode of battery cell 32a, which is located the farthest rearward. The lead plate 38b shown in FIG. 7 connects the positive electrode of the battery cell 32a and the negative electrode of battery cell 32b, which is arrayed (located) forward of the battery cell 32a. The lead plate 38c shown in FIG. 6 connects the positive electrode of the battery cell 32b and the negative electrode of battery cell 32c, which is arrayed (located) forward of the battery cell 32b. The lead plate 38d shown in FIG. 7 connects the positive electrode of the battery cell 32c and the negative electrode of battery cell 32d, which is arrayed (located) forward of the battery cell 32c. The lead plate 38e shown in FIG. 6 connects the positive electrode of the battery cell 32d and the negative electrode of battery cell 32e, which is arrayed (located) forward of the battery cell 32d. The lead plate 38f shown in FIG. 7 is connected to the positive electrode of the battery cell 32e. The five battery cells 32 are electrically connected with each other in series via the lead plates 38a, 38b, 38c, 38d, 38e, 38f. The rated voltage of the battery pack 4 is thereby 18 V.

As shown in FIG. 6, the circuit board 36 is snap-fit connected to the upper surface of the cell cover 34. Specifically, tabs 40 provided on the upper surface of the cell cover 34 engage with the circuit board 36. The circuit board 36 is disposed along a plane orthogonal to the up-down direction (e.g., a plane defined by first direction D1, third direction D3 and fourth direction D4). The plurality of battery-side terminals 12 is provided on an upper surface of the circuit board 36.

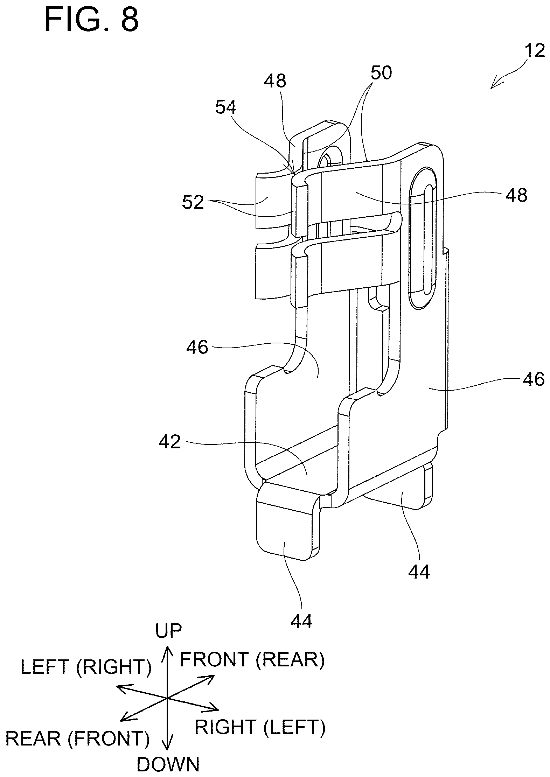

As shown in FIG. 8, each of the battery-side terminals 12 comprises a base portion 42 having a flat sheet shape that follows (is parallel to) the circuit board 36, two leg portions 44 respectively extending downward (perpendicularly) from the front end and the rear end of the base portion 42, two arm portions 46 respectively extending (perpendicularly) upward from the left end and the right end of the base portion 42, and two spring (pinching, clamping) portions 48 respectively extending from the two arm portions 46. Each of the two leg portions 44 is fixed to the circuit board 36 by being pushed into through holes (not shown) formed in the circuit board 36. The two spring portions 48 are so-called leaf springs, each of which is elastically deformable in the left-right direction (third direction D3). The two spring portions 48 have: first guide portions 50, the distance between which in the left-right direction decreases as the distance from the base ends thereof (i.e., from the arm portions 46) increases; second guide portions 52, the distance between which in the left-right direction decreases as the distance from the tip ends thereof increases; and contact portions 54, which are located between the first guide portions 50 and the second guide portions 52.

When mounting the battery pack 4 on the charger 6, the device-side terminals 8 of the charger 6, which move in the front-rear direction relative to the battery pack 4 (see FIG. 1), pass between the respective two arm portions 46, push apart the respective first guide portions 50 (and the respective second guide portions 52), and are respectively disposed between the contact portions 54. In this manner, the device-side terminals 8 are pinched (clamped, squeezed) in the left-right direction by the battery-side terminals 12. Similarly, when mounting the battery pack 4 on the electric work machine 16, the device-side terminals 18 of the electric work machine 16, which move in the front-rear direction relative to the battery pack 4 (see FIG. 3), pass between the respective two arm portions 46, push apart the respective first guide portions 50 (and the respective second guide portions 52), and are respectively disposed between the contact portions 54. In this manner, the device-side terminals 18 are pinched (clamped, squeezed) in the left-right direction by the battery-side terminals 12.

As shown in FIG. 9, the plurality of battery-side terminals 12 includes: two battery-side, positive-electrode terminals 56f, 56s used for discharging or charging (for conducting relatively large currents either for supplying electric (drive) current to an electronic device (electronic work machine) 16 attached to the battery pack 4 or for receiving electric (charging) current from a charger 6 attached to the battery pack 4 to recharge the battery cells 32); two battery-side, negative-electrode terminals 58f, 58s used for discharging or charging (for conducting relatively large currents either for supplying electric (drive) current to an electronic device (electronic work machine) attached to the battery pack 4 or for receiving electric (charging) current from a charger 6 attached to the battery pack 4 to recharge the battery cells 32); one battery-side, discharging-signal terminal 60 used for signal communication with (conducting electric signals, e.g., relatively low current control signals, to/from) the electric work machine 16; and two battery-side, charging-signal terminals 62f, 62s used for signal communication with (conducting electric signals, e.g., relatively low current control signals, to/from) the charger 6.

Both of the battery-side, positive-electrode terminals 56f, 56s are disposed (aligned) along first virtual axis A1, which is parallel to the front-rear direction (D1-D4 direction). Specifically, the battery-side, positive-electrode terminal 56f is disposed such that first virtual axis A1 is positioned in (intersects) the middle of the contact portions 54 (see FIG. 8) with the second guide portions 52 (see FIG. 8) in a rearward-facing orientation. The battery-side, positive-electrode terminal 56s is disposed such that first virtual axis A1 also is positioned in (intersects) the middle of the contact portions 54 (see FIG. 8) with the second guide portions 52 (see FIG. 8) in a forward-facing orientation. The battery-side, positive-electrode terminal 56s is disposed rearward of the battery-side, positive-electrode terminal 56f (i.e. offset or spaced apart from the battery-side, positive-electrode terminal 56f in fourth direction D4).

The battery-side, discharging-signal terminal 60 is disposed (aligned) along second virtual axis A2, which is parallel to virtual axis A1 and is offset to the right of first virtual axis A1 by first distance d1. Specifically, the battery-side, discharging-signal terminal 60 is disposed such that second virtual axis A2 is positioned in (intersects) the middle of the contact portions 54 (see FIG. 8) with the second guide portions 52 (see FIG. 8) in a forward-facing orientation. First distance d1 is within a range of 6.0-8.0 mm and is, for example, 6.5 mm, 7.0 mm, or 7.5 mm.

The battery-side, charging-signal terminal 62f is disposed (aligned) along third virtual axis A3, which is parallel to virtual axes A1, A2 and is offset to the right of second virtual axis A2 by second distance d2. Specifically, the battery-side, charging-signal terminal 62f is disposed such that third virtual axis A3 is positioned in (intersects) the middle of the contact portions 54 (see FIG. 8) with the second guide portions 52 (see FIG. 8) in a forward-facing orientation. Second distance d2 is within a range of 17.0-19.0 mm and is, for example, 17.5 mm, 18.0 mm, or 18.5 mm.

The battery-side, charging-signal terminal 62s is disposed (aligned) along fourth virtual axis A4, which is parallel to virtual axes A1-A3 and is offset to the right of third virtual axis A3 by third distance d3. Specifically, the battery-side, charging-signal terminal 62s is disposed such that fourth virtual axis A4 is positioned in (intersects) the middle of the contact portions 54 (see FIG. 8) with the second guide portions 52 (see FIG. 8) in a forward-facing orientation. Third distance d3 is within a range of 6.0-8.0 mm and is, for example, 6.5 mm, 7.0 mm, or 7.5 mm.

Both of the battery-side, negative-electrode terminals 58f, 58s are disposed (aligned) along fifth virtual axis A5, which is parallel to virtual axes A1-A4 and is offset to the right of fourth virtual axis A4 by fourth distance d4. Specifically, the battery-side, negative-electrode terminal 58f is disposed such that fifth virtual axis A5 is positioned in (intersects) the middle of the contact portion 54 (see FIG. 8) with the second guide portions 52 (see FIG. 8) in a rearward-facing orientation. The battery-side, negative-electrode terminal 58s is disposed such that fifth virtual axis A5 also is positioned in (intersects) the middle of the contact portion 54 (see FIG. 8) with the second guide portions 52 (see FIG. 8) in a forward-facing orientation. The battery-side, negative-electrode terminal 58s is disposed rearward of the battery-side, negative-electrode terminal 58f. Fourth distance d4 is within a range of 6.0-8.0 mm and is, for example, 6.5 mm, 7.0 mm, or 7.5 mm.

In the present working example, first distance d1, third distance d3, and fourth distance d4 are set to values (distances) that are equal to each other. Second distance d2 is set to a value that is greater than each of first distance d1, third distance d3, and fourth distance d4. For example, second distance d2 is set to a value equal to or greater than two times each of first distance d1, third distance d3, and fourth distance d4. Alternatively, the ratio of first distance d1, second distance d2, third distance d3, and fourth distance d4 is set to a predetermined ratio (e.g., 7:18:7:7).

The battery-side, positive-electrode terminal 56s, the battery-side, discharging-signal terminal 60, and the battery-side, negative-electrode terminal 58s are disposed at the same location in the front-rear direction. Specifically, the rear-end location of the battery-side, positive-electrode terminal 56s, the rear-end location of the battery-side, discharging-signal terminal 60, and the rear-end location of the battery-side, negative-electrode terminal 58s are disposed along (are intersected by) sixth virtual axis A6, which is parallel to the left-right direction (third direction D3). The battery-side, charging-signal terminal 62f and the battery-side, charging-signal terminal 62s are disposed at the same location in the front-rear direction. Specifically, the rear-end location of the battery-side, charging-signal terminal 62f and the rear-end location of the battery-side, charging-signal terminal 62s are disposed along (are intersected by) seventh virtual axis A7, which is also parallel to the left-right direction (aligned). Seventh virtual axis A7 is offset forward of sixth virtual axis A6 by fifth distance d5. That is, the rear-end location of the battery-side, charging-signal terminal 62f and the rear-end location of the battery-side, charging-signal terminal 62s are offset forward of the battery-side, positive-electrode terminal 56s, the battery-side, discharging-signal terminal 60, and the battery-side, negative-electrode terminal 58s by fifth distance d5. Fifth distance d5 is within a range of 1.0-13.0 mm and is, for example, 3.0 mm.

As shown in FIG. 7, three LEDs 64 and a switch 66 are provided on the lower surface of the circuit board 36 at a rear portion of the circuit board 36. As shown in FIG. 5, a remaining-charge display window 68, through which light from one or more of the three LEDs 64 passes, and a button 70, which is for the user to turn the switch 66 ON/OFF, are provided on a rear wall of the lower-part case 28. The battery pack 4 can display the remaining charge of the battery pack 4 by causing one, two or three of the LEDs 64 to emit light. In addition, when the button 70 is manipulated (e.g., pressed), the battery pack 4 switches the display of the remaining charge ON/OFF each time the switch 66 is turned ON/OFF. In addition, as also shown in FIG. 5, a plurality of support projections 72 is provided on a bottom wall of the lower-part case 28. The support projections 72 protrude upward from the bottom wall of the lower-part case 28. The support projections 72 are shaped to conform to the outer-circumferential surfaces of the battery cells 32. The support projections 72 support the battery cells 32 by abutting the support projections 72 against the outer-circumferential surfaces of the battery cells 32 (i.e. the battery cells 32 sit in the wells or valleys defined by the support projections 72).

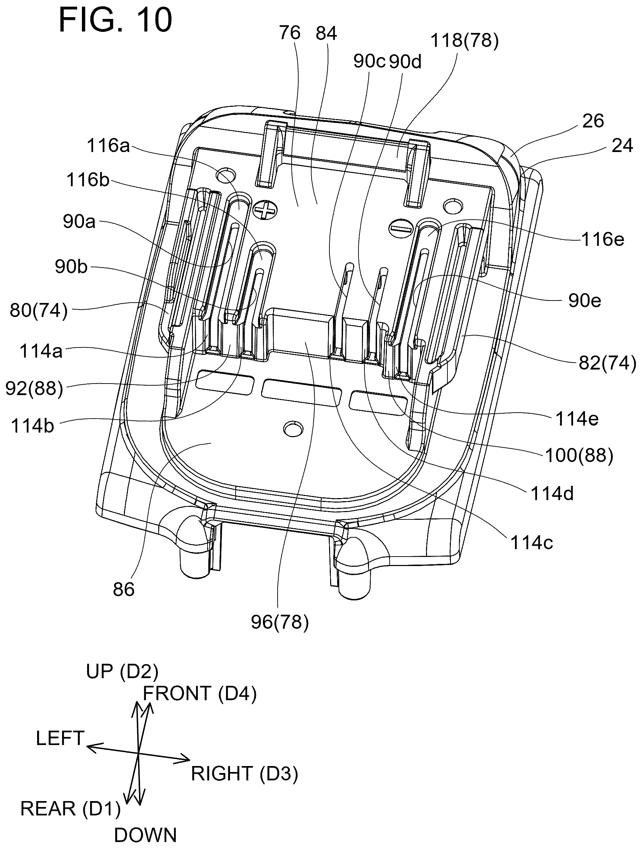

As shown in FIG. 10, the upper-part case 26 comprises slide rails 74, a terminals-receiving part 76, and a hook 78. The terminals-receiving part 76 is a portion of the housing of the battery pack 4 that is configured to accommodate (receive) device-side terminals (8, 18) when the battery pack 4 is mounted on a charger 6 or on the electric work machine 16.

When the battery pack 4 is being mounted on or detached from the charger 6 or the electric work machine 16, the slide rails 74 engage in a slidable manner with slide rails 216, with which the charger 6 is provided (see FIG. 1), or with slide rails 304, with which the electric work machine 16 is provided (see FIG. 3). The slide rails 74 include a first rail 80, which is disposed on a left-upper portion of the upper-part case 26, and a second rail 82, which is disposed on a right-upper portion of the upper-part case 26.

The terminals-receiving part 76 is an upper portion of the upper-part case 26 and is disposed between the first rail 80 and the second rail 82. The terminals-receiving part 76 comprises: a front-side flat wall 84, which extends orthogonally to the up-down direction (i.e. extends in a first plane defined by first direction D1, third direction D3 and fourth direction D4) at a front portion of the upper-part case 26; a rear-side flat wall 86, which extends orthogonally to the up-down direction (i.e. extends in a second plane defined by first direction D1, third direction D3 and fourth direction D4 and parallel to the first plane) at a rear portion of the upper-part case 26; a (at least one) standing wall 88, which extends in a direction orthogonal to the front-rear direction (i.e. extends in a plane defined by second direction D2 and third direction D3) and connects the front-side flat wall 84 and the rear-side flat wall 86; and a plurality of slits (slots) 90a, 90b, 90c, 90d, 90e, each of which is formed spanning the standing wall 88 and the front-side flat wall 84 (i.e. the slits 90a, 90b, 90c, 90d, 90e pass (penetrate) through portions of the standing wall 88 and the front-side flat wall 84). The upper surface of the front-side flat wall 84 is connected, in a flush manner, to each of the upper surface of the first rail 80 and the upper surface of the second rail 82. The upper surface of the rear-side flat wall 86 is offset downward relative to the upper surface of the front-side flat wall 84.

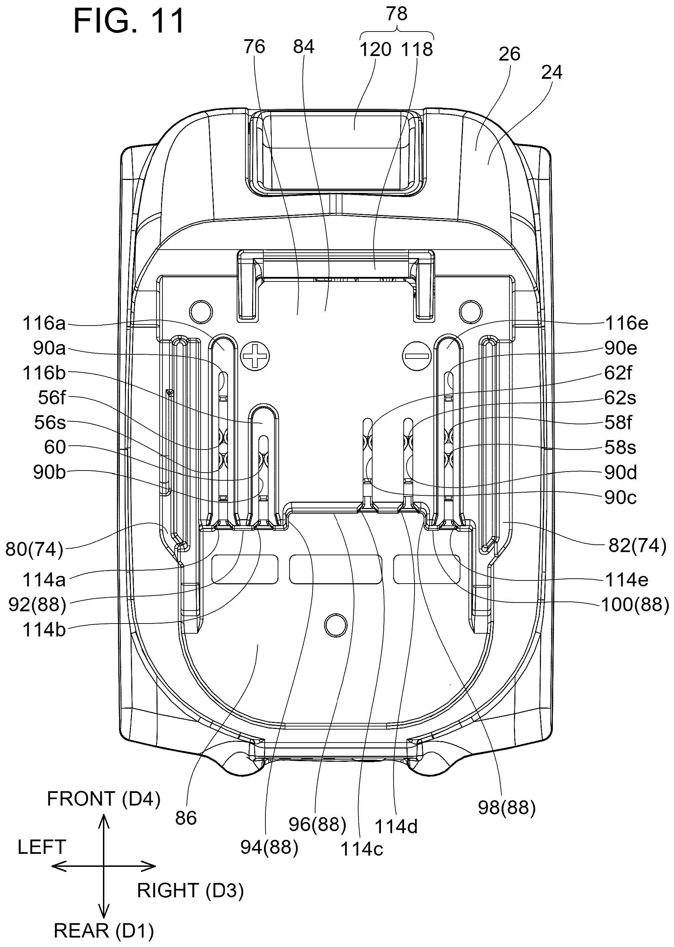

As shown in FIGS. 10 and 11, the standing wall 88 comprises: first flat-wall portions 92 extending rightward (in third direction D3) from the right-side surface of the first rail 80; a first connecting portion 94 extending forward from the right end of the first flat-wall portions 92; second flat-wall portions 96 extending rightward from the front end of the first connecting portion 94; a second connecting portion 98 extending rearward from the right end of the second flat-wall portions 96; and third flat-wall portions 100 extending rightward from the rear end of the second connecting portion 98 and connecting to the left-side surface of the second rail 82. In the left-right direction (third direction D3), the first flat-wall portions 92 and the second flat-wall portions 96 are adjacent to each other, and the second flat-wall portions 96 and the third flat-wall portions 100 are adjacent to each other. In the front-rear direction, the location of the first flat-wall portions 92 and the location of the third flat-wall portions 100 are aligned with each other. Specifically, a rear surface of the first flat-wall portions 92 and a rear surface of the third flat-wall portions 100 are flush. In addition, the second flat-wall portions 96 are offset forward (in fourth direction D4) relative to both the first flat-wall portions 92 and the third flat-wall portions 100. Specifically, a rear surface of the second flat-wall portions 96 is offset forward (in fourth direction D4) relative to both the rear surface of the first flat-wall portions 92 and the rear surface of the third flat-wall portions 100.

The slits 90a, 90b, 90c, 90d, 90e are arrayed from left to right in the order of the slit 90a, the slit 90b, the slit 90c, the slit 90d, and the slit 90e. The slit 90a is disposed at a location that opposes (faces, is adjacent to) the battery-side, positive-electrode terminals 56f, 56s in the up-down direction (second direction D2) and (opposes (faces, is adjacent to) the battery-side, positive-electrode terminal 56s in the front-rear direction (first direction D1). The slit 90a receives the device-side terminals 8, 18 corresponding to the battery-side, positive-electrode terminals 56f, 56s (i.e., a device-side, positive-electrode terminal 256 of the charger 6 as shown in FIG. 1 and a device-side, positive-electrode terminal 356 of the electric work machine 16 as shown in FIG. 3) in the interior of the outer case 24 (i.e. in the interior of the terminals-receiving part 76). The slit 90b is disposed at a location that opposes (faces, is adjacent to) the battery-side, discharging-signal terminal 60 in the up-down direction (second direction D2) and in the front-rear direction (first direction D1). The slit 90b receives the device-side terminal 18 corresponding to the battery-side, discharging-signal terminal 60 (i.e., a device-side, discharging-signal terminal 360 of the electric work machine 16 as shown in FIG. 3) in the interior of the outer case 24. The slit 90c is disposed at a location that opposes (faces, is adjacent to) the battery-side, charging-signal terminal 62f in the up-down direction (second direction D2) and in the front-rear direction (first direction D1). The slit 90c receives the device-side terminal 8 corresponding to the (first) battery-side, charging-signal terminal 62f (i.e., a (first) device-side, charging-signal terminal 262f of the charger 6 as shown in FIG. 1) in the interior of the outer case 24. The slit 90d is disposed at a location that opposes (faces, is adjacent to) the (second) battery-side, charging-signal terminal 62s in the up-down direction (second direction D2) and in the front-rear direction (first direction D1). The slit 90d receives the device-side terminal 8 corresponding to the battery-side, charging-signal terminal 62s (i.e., a (second) device-side, charging-signal terminal 262s of the charger 6 as shown in FIG. 1) in the interior of the outer case 24. The slit 90e is disposed at a location that opposes (faces, is adjacent to) the battery-side, negative-electrode terminals 58f, 58s in the up-down direction (second direction D2) and (opposes (faces, is adjacent to) the battery-side, negative-electrode terminal 58s in the front-rear direction (first direction D1). The slit 90e receives the device-side terminals 8, 18 corresponding to the battery-side, negative-electrode terminals 58f, 58s (i.e., a device-side, negative-electrode terminal 258 of the charger 6 as shown in FIG. 1 and a device-side, negative-electrode terminal 358 of the electric work machine 16 as shown in FIG. 3) in the interior of the outer case 24.

The slit 90a and the slit 90b are formed spanning (passing, penetrating through or between) the first flat-wall portions 92 of the standing wall 88 and the front-side flat wall 84. The slit 90c and the slit 90d are formed spanning (passing, penetrating through or between) the second flat-wall portions 96 of the standing wall 88 and the front-side flat wall 84. The slit 90e is formed spanning (passing, penetrating through or between) the third flat-wall portions 100 of the standing wall 88 and the front-side flat wall 84.

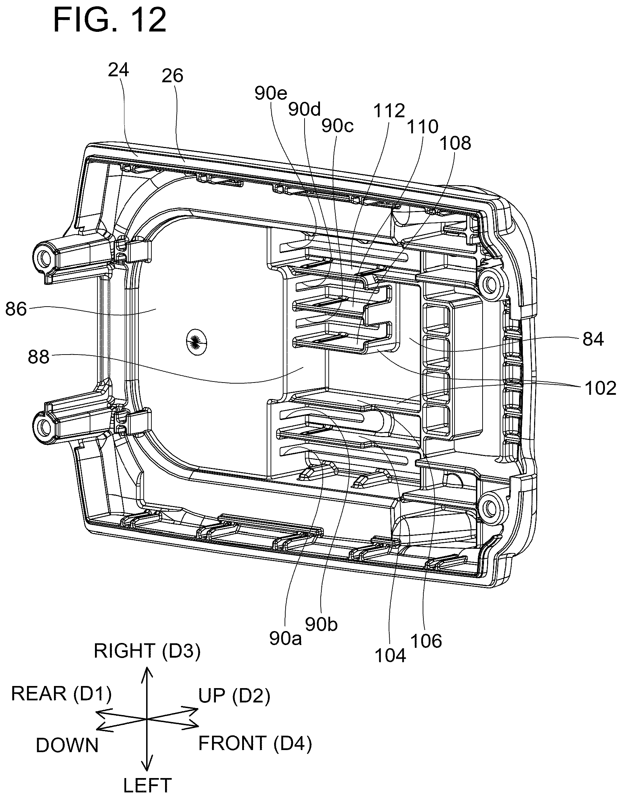

As shown in FIG. 12, the terminals-receiving part 76 further comprises partition walls 102, which extend forward (in fourth direction D4) from an inner surface of the standing wall 88 and extend downward from an inner surface of the front-side flat wall 84. The partition walls 102 comprise: a first partition 104 extending between the slit 90a and the slit 90b in the front-rear direction; a second partition 106 that passes rightward of the slit 90b and extends along the front-rear direction; a third partition 108 that passes leftward of the slit 90c and extends along the front-rear direction; a fourth partition 110 that passes between the slit 90c and the slit 90d and extends in the front-rear direction; and a fifth partition 112 that passes between the slit 90d and the slit 90e and extends in the front-rear direction.

As shown in FIGS. 10 and 11, the terminals-receiving part 76 further has a plurality of guide recessed portions 114a, 114b, 114c, 114d, 114e and a plurality of mating recessed portions 116a, 116b, 116e. The guide recessed portions 114a, 114b, 114c, 114d, 114e are formed by recessing the rear surface of the standing wall 88 in the forward direction (fourth direction D4) around the slits 90a, 90b, 90c, 90d, 90e, respectively. The left-right widths of the guide recessed portions 114a, 114b, 114c, 114d, 114e decrease as they go (extend) forward. The guide recessed portions 114a, 114b, 114c, 114d, 114e guide the device-side terminals 8 (or the device-side terminals 18), when being moved forward from rearward of the standing wall 88, into the slits 90a, 90b, 90c, 90d, 90e, respectively. In addition, the mating recessed portions 116a, 116b, 116e are formed by recessing the upper surface of the front-side flat wall 84 downward around the slits 90a, 90b, 90e, respectively. The rear ends of the mating recessed portions 116a, 116b, 116e are connected to the upper ends of the guide recessed portions 114a, 114b, 114e. The mating recessed portions 116a, 116b, 116e respectively receive mating protruding portions 264a, 264b, 264e protruding from the terminal-mounting surface 10 of the charger 6 (see FIG. 1) and mating protruding portions 364a, 364e protruding from the terminal-mounting surface 20 of the electric work machine 16 (see FIG. 3). It is noted that recessed portions are not provided around either of the slit 90c and the slit 90d.

As shown in FIG. 11, the hook 78 is movably disposed on a forward-upper portion of the upper-part case 26. The hook 78 has a protruding portion 118 and a manipulable portion 120. The protruding portion 118 protrudes toward the exterior of the outer case 24 (i.e. in second direction D2). The manipulable portion 120 is exposed to the exterior of the outer case 24 and disposed at a location such that it can be manipulated by the user even in the state in which the battery pack 4 is mounted on the charger 6 or the electric work machine 16. The hook 78 is movable relative to the outer case 24. The hook 78 is biased toward the exterior (in second direction D2) of the outer case 24 by a compression spring (not shown), which is mounted on a projection 122 (see FIG. 6) formed on the upper surface of the cell cover 34. When the manipulable portion 120 or the protruding portion 118 is pressed toward the interior of the outer case 24, the hook 78 moves into the interior of the outer case 24 against the biasing force of the compression spring. When the battery pack 4 is mounted on the charger 6 or the electric work machine 16, the protruding portion 118 engages with an engaging groove 218 of the charger 6 (see FIG. 1) or an engaging groove 306 of the electric work machine 16 (see FIG. 3), thereby (temporarily and releasably) fixing the battery pack 4 to the charger 6 or the electric work machine 16. When removing the battery pack 4 from the charger 6 or the electric work machine 16, the manipulable portion 120 is pushed into the interior of the outer case 24, thereby retracting the protruding portion 118 into the interior of the outer case 24. The engagement between the protruding portion 118 and the engaging groove 218, 306 is thereby released. In this state, the battery pack 4 can be removed from the charger 6 or the electric work machine 16 by sliding the battery pack 4 in the front direction.

### Configuration of Charger 6

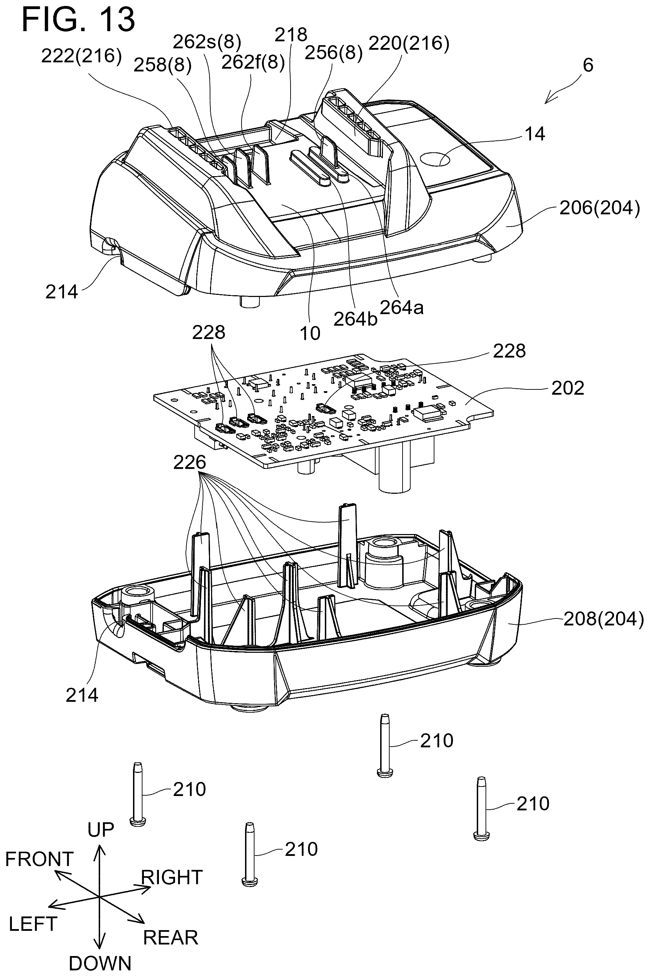

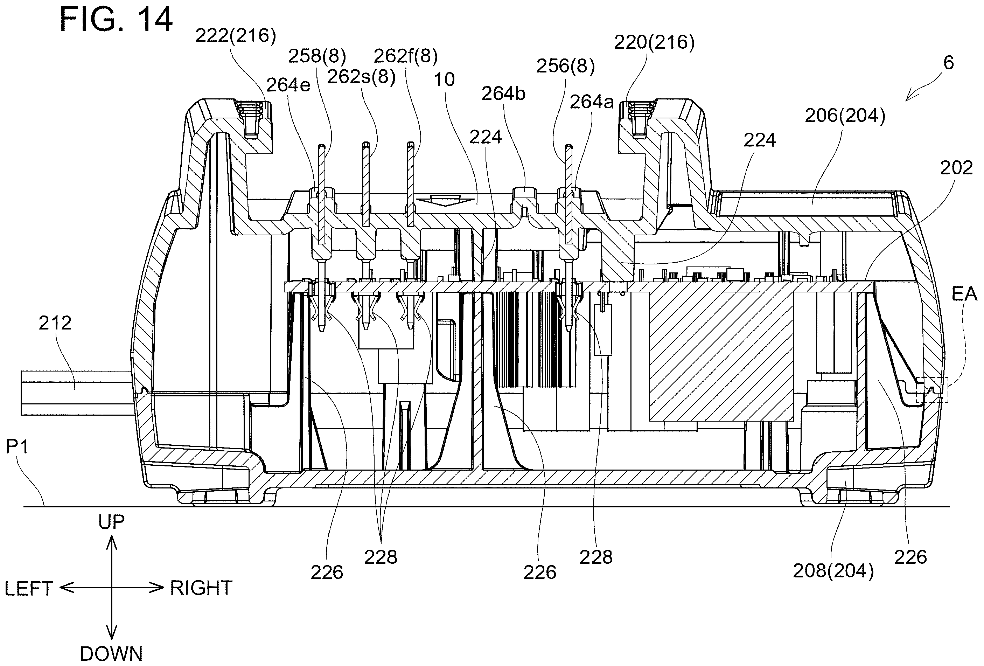

Next, the description will focus on the charger 6. Here, the front, rear, up, down, left, and right directions are defined with reference to the charger 6 separately from the front, rear, up, down, left, and right directions defined with reference to the battery pack 4. As shown in FIG. 14, the charger 6 is typically used in the state of being placed on a flat support surface P1. In the present working example, a direction that is orthogonal to the support surface P1 and is the direction from the support surface P1 toward the charger 6 is defined as the up direction of the charger 6. A direction that is orthogonal to the support surface P1 and is the direction from the charger 6 toward the support surface P1 is defined as the down direction of the charger 6. In addition, the direction of first direction D1 (see FIG. 1) projected on the support surface P1 is defined as the rear direction, and the opposite direction is defined as the front direction. In addition, the direction of third direction D3 (see FIG. 1) projected on the support surface P1 is defined as the left direction, and the opposite direction is defined as the right direction. In FIGS. 13-17, which show only the charger 6, the front, rear, up, down, left, and right directions are illustrated with reference to the charger 6.

As shown in FIG. 13, the charger 6 comprises a circuit board 202 and a housing 204, which houses the circuit board 202. The housing 204 is divided into an upper-part housing 206 and a lower-part housing 208. The upper-part housing 206 and the lower-part housing 208 are affixed to each other by four screws 210. An opening 214 for disposing (passing through) a power-supply cord 212 (see FIG. 14) is defined in a left wall of the housing 204 between the upper-part housing 206 and the lower-part housing 208.

The upper surface of the upper-part housing 206 is provided with the terminal-mounting surface 10, the slide rails 216, the engaging groove 218, and the indicator part 14. The terminal-mounting surface 10, the slide rails 216, and the engaging groove 218 are disposed on a left portion of the upper surface of the upper-part housing 206. The indicator part 14 is disposed on a right portion of the upper surface of the upper-part housing 206.

The slide rails 216 include a first rail 220, which is disposed rightward of the terminal-mounting surface 10, and a second rail 222, which is disposed leftward of the terminal-mounting surface 10. The first rail 220 engages with the first rail 80 of the battery pack 4 (see FIG. 10) in a slidable manner, thereby supporting the battery pack 4 in a manner so as to be slidable in first direction D1 and fourth direction D4. The second rail 222 engages with the second rail 82 of the battery pack 4 (see FIG. 10) in a slidable manner, thereby supporting the battery pack 4 in a manner so as to be slidable in first direction D1 and fourth direction D4.

The engaging groove 218 is disposed forward of the terminal-mounting surface 10. The protruding portion 118 of the hook 78, which is provided in the battery pack 4 (see FIG. 10), engages with the engaging groove 218.

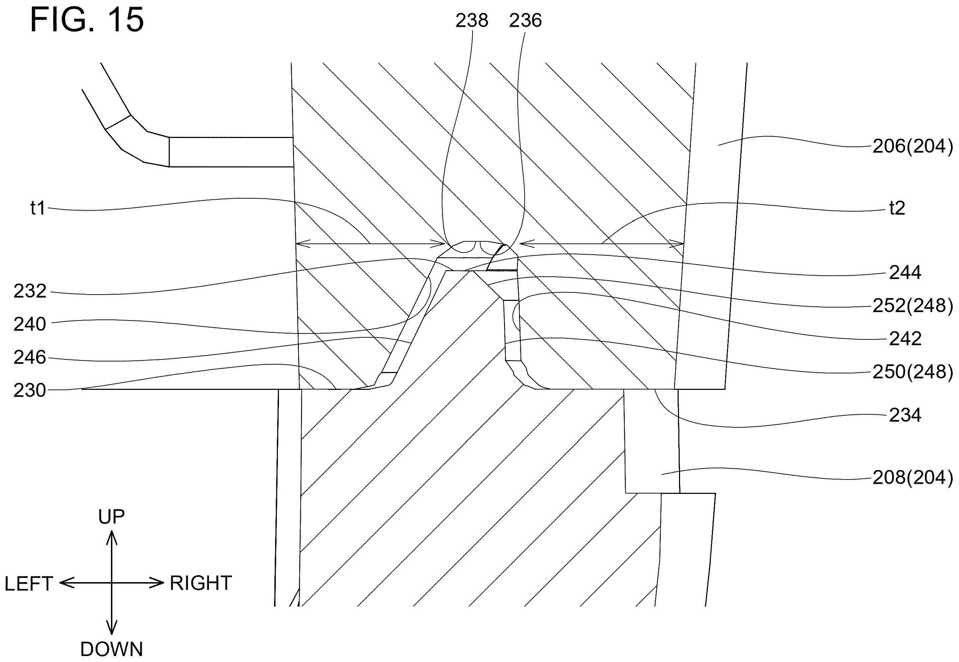

As shown in FIG. 15, the lower-part housing 208 comprises a ridge 232, which protrudes upward from an upper-end surface 230 of the lower-part housing 208. The upper-part housing 206 has a recessed groove 236, which is recessed upward from a lower-end surface 234 of the upper-part housing 206. The ridge 232 enters the recessed groove 236, whereby the upper-part housing 206 and the lower-part housing 208 are positioned relative to each other.

The recessed groove 236 has a downward-facing bottom portion 238, a first side surface 240 located on the inner side of the upper-part housing 206 as viewed from the bottom portion 238, and a second side surface 242 located on the outer side of the upper-part housing 206 as viewed from the bottom portion 238. The first side surface 240 connects the bottom portion 238 and the lower-end surface 234 of the upper-part housing 206. The first side surface 240 is inclined so as to go (extend) toward the interior of the upper-part housing 206 the further downward the surface goes (extends). The second side surface 242 connects the bottom portion 238 and the lower-end surface 234 of the upper-part housing 206. The second side surface 242 extends substantially parallel to the up-down direction. The width of the recessed groove 236 in a direction orthogonal to the up-down direction becomes wider as it goes (extends) away from the bottom portion 238. The recessed groove 236 is arranged at a location at which thickness t1 of the upper-part housing 206 located inward, as viewed from the bottom portion 238, and thickness t2 of the upper-part housing 206 located outward, as viewed from the bottom portion 238, are at least substantially equal, preferably equal.

The ridge 232 has a tip end 244, a first side surface 246 located on the inner side of the lower-part housing 208 as viewed from the tip end 244, and a second side surface 248 located on the outer side of the lower-part housing 208 as viewed from the tip end 244. The first side surface 246 connects the tip end 244 and the upper-end surface 230 of the lower-part housing 208. The first side surface 246 is inclined so as to go (extend) toward the interior of the lower-part housing 208 the further downward the surface goes (extends). The second side surface 248 has a base surface 250, which extends from the upper-end surface 230 of the lower-part housing 208, and a guide surface 252, which extends from the tip end 244 and connects to the base surface 250. The base surface 250 extends substantially parallel to the up-down direction. The guide surface 252 is inclined so as to go (extend) toward the exterior of the lower-part housing 208 the further downward the surface goes (extends). The width of the ridge 232 in the direction orthogonal to the up-down direction becomes wider as it goes (extends) away from the tip end 244.

As shown in FIG. 14, the terminal-mounting surface 10 is inclined relative to the charger 6 (more specifically, to a bottom of the charger 6, which is parallel to the support surface P1) in the front-rear direction. When the counterclockwise direction as viewed from the right is considered to be "positive", the inclination angle of the terminal-mounting surface 10 relative to the charger 6 in the front-rear direction is within a range of, for example, 3°-30°; in the present working example, it is 8°. The inclination angle of the terminal-mounting surface 10 relative to the charger 6 in the front-rear direction can also be said to be the inclination angle of first direction D1 relative to the charger 6 in the front direction, and can also be said to be the inclination angle of fourth direction D4 relative to the charger 6 in the rear direction.

As shown in FIGS. 13, 14 and 17, each of the device-side terminals 8 has a sheet shape (rib shape, fin shape) that is parallel to first direction D1 and second direction D2 and is integrated on (with) the upper-part housing 206 by insert molding. The plurality of device-side terminals 8 includes: the device-side, positive-electrode terminal 256, which is used for charging (conducting relatively large currents) from the charger 6 to the battery pack 4; the device-side, negative-electrode terminal 258, which is used for charging (conducting relatively large currents) from the charger 6 to the battery pack 4; and the two device-side, charging-signal terminals 262f, 262s, which are used for signal communication (conducting relatively low-current electric signals) between the charger 6 and the battery pack 4.

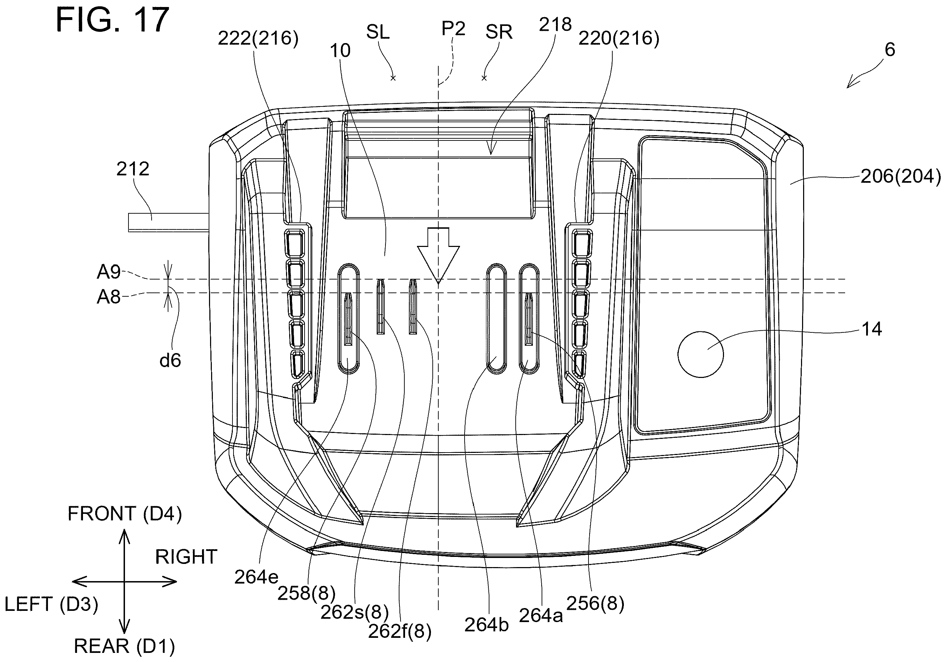

As shown in FIG. 17, each of the two device-side, charging-signal terminals 262f, 262s is disposed in space SL, which is on the left side of virtual plane P2 that bisects, in the left-right direction, the area between the device-side, positive-electrode terminal 256 and the device-side, negative-electrode terminal 258. In addition, the location of an end portion (front end, front edge) of the device-side, positive-electrode terminal 256 in fourth direction D4 and the location of an end portion (front end, front edge) of the device-side, negative-electrode terminal 258 in fourth direction D4 are aligned with each other and disposed on (intersected by) eighth virtual axis A8, which is parallel to the left-right direction (i.e. eight virtual axis A8 intersects the frontmost end of the device-side, positive-electrode terminal 256 and the frontmost end of the device-side, negative-electrode terminal 258). The locations of end portions (front ends, front edges) of the two device-side, charging-signal terminals 262f, 262s in fourth direction D4 are aligned with each other and disposed on (intersected by) ninth virtual axis A9, which is parallel to the left-right direction (i.e. ninth virtual axis A9 intersects the frontmost ends of the two device-side, charging-signal terminals 262f, 262s). Ninth virtual axis A9 is offset from eighth virtual axis A8 in fourth direction D4 by sixth distance d6. That is, the locations of the end portions (frontmost ends) of the two device-side, charging-signal terminals 262f, 262s in fourth direction D4 are offset or shifted, in fourth direction D4 by sixth distance d6, from the location of the end portion (frontmost end) of the device-side, positive-electrode terminal 256 in fourth direction D4 and the location of the end portion (frontmost end) of the device-side, negative-electrode terminal 258 in fourth direction D4. Sixth distance d6 is within a range of 1.0-13.0 mm and is, for example, 3.0 mm. In the present working example, sixth distance d6 is set to the same value as fifth distance d5.

The upper-part housing 206 has the plurality of mating protruding portions 264a, 264b, 264e, which protrude (perpendicularly) upward (in second direction D2) from the terminal-mounting surface 10. The mating protruding portion 264a is disposed such that it contacts (and surrounds) the device-side, positive-electrode terminal 256. The mating protruding portion 264b is disposed such that it does not contact any of the device-side terminals 8. The mating protruding portion 264e is disposed such that it contacts (and surrounds) the device-side, negative-electrode terminal 258. The mating protruding portions 264a, 264b are disposed in space SR, which is on the right side of virtual plane P2. The mating protruding portion 264e is disposed in the space SL, which is on the left side of virtual plane P2. The mating protruding portions 264a, 264b, 264e respectively mate with the mating recessed portions 116a, 116b, 116e of the battery pack 4 when the battery pack 4 is mounted on the charger 6, thereby partially blocking off the slits 90a, 90b, 90e.

As shown in FIG. 14, the circuit board 202 is sandwiched between upperportion support projections 224, which protrude from an inner surface of the upper-part housing 206, and lower-portion support projections 226, which protrude from an inner surface of the lower-part housing 208. The circuit board 202 is disposed along a plane orthogonal to the up-down direction. In addition, the circuit board 202 is provided with a plurality of connection terminals 228 corresponding to the plurality of device-side terminals 8.

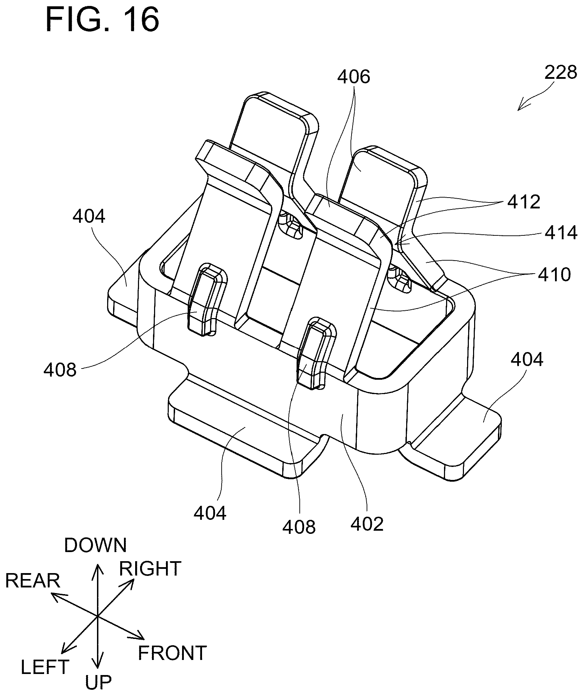

As shown in FIG. 16, each of the connection terminals 228 has: a mating portion 402, which mates with a rectangular through-hole (not shown) formed in the circuit board 202 (see FIG. 14); flat-plate portions 404, which extend in the horizontal direction from the upper end of the mating portion 402; a pair of left and right spring portions 406, which extend downward from the lower end of the mating portion 402; and protruding portions 408, which are formed spanning an outer surface of the mating portion 402 and outer surfaces of the spring portions 406. The connection terminals 228 are mounted on the circuit board 202 such that the circuit board 202 is disposed between the flat-plate portions 404 and the protruding portions 408. The flat-plate portions 404 abut an upper surface of the circuit board 202, thereby restricting (blocking) movement of the connection terminals 228 downward relative to the circuit board 202. The protruding portions 408 abut a lower surface of the circuit board 202, thereby restricting (blocking) movement of the connection terminals 228 upward relative to the circuit board 202. The spring portions 406 are so-called leaf springs and are elastically deformable in the left-right direction. The spring portions 406 have: first guide portions 410, the distance between which, in the left-right direction, becomes smaller the farther away from the base ends thereof (i.e., the mating portion 402); second guide portions 412, the distance between which, in the left-right direction, becomes smaller the farther away from the tip ends thereof; and contact portions 414 located between the first guide portions 410 and the second guide portions 412.

As shown in FIG. 14, when the device-side terminals 8 are respectively pushed into the connection terminals 228, the device-side terminals 8 push apart the first guide portions 410 (see FIG. 16) and are (elastically) pinched (clamped, squeezed) between the contact portions 414 (see FIG. 16). The device-side terminals 8 are thereby electrically connected to the circuit board 202 via the connection terminals 228.

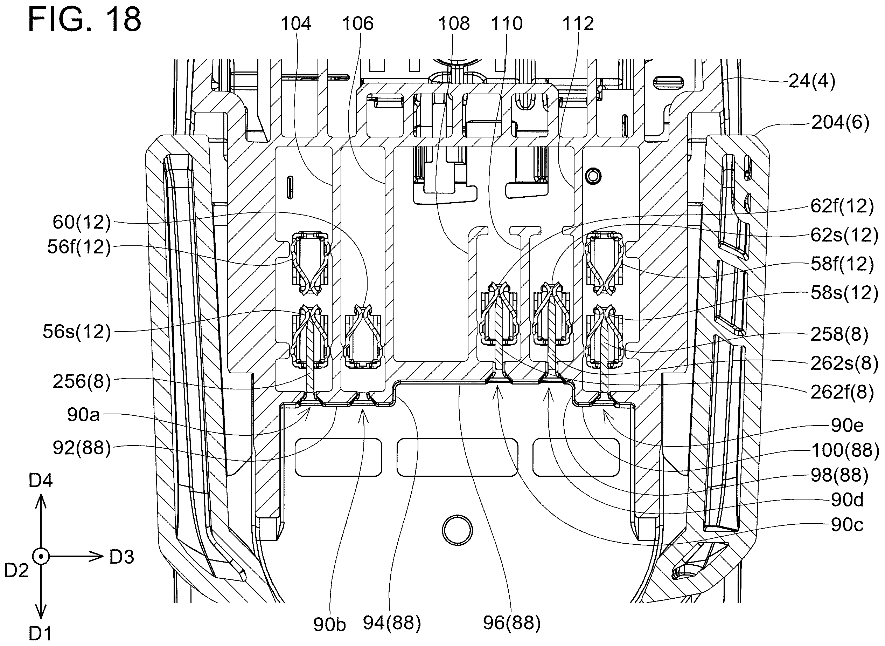

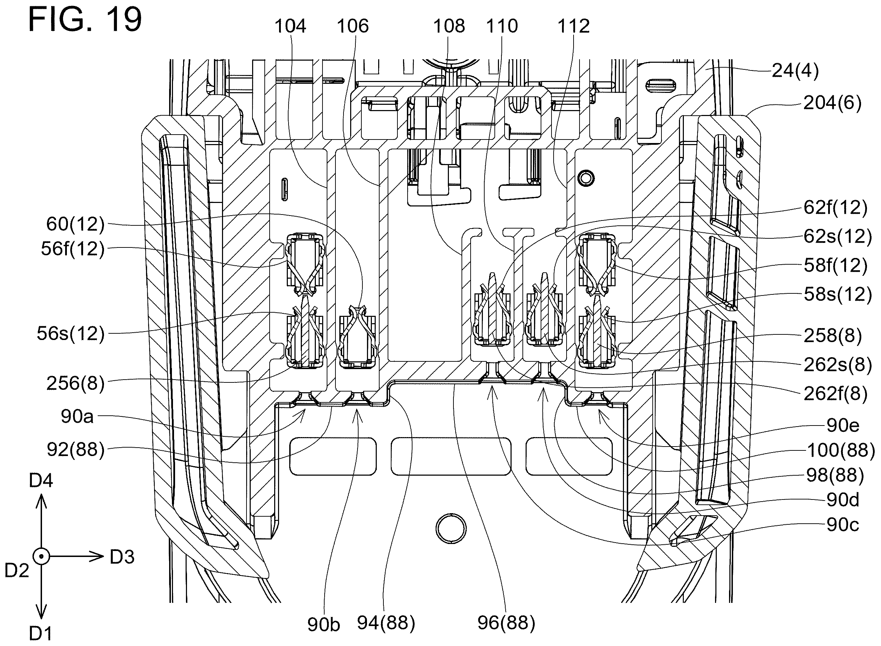

As shown in FIG. 18 and FIG. 19, the battery pack 4 is mounted on the charger 6 by sliding the battery pack 4 in first direction D1 relative to the charger 6. When mounting the battery pack 4 on the charger 6, each of the device-side terminals 8 of the charger 6 moves in fourth direction D4 relative to the outer case 24 of the battery pack 4. At this time, the device-side, positive-electrode terminal 256 passes through the slit 90a, enters the interior of the outer case 24 (more specifically, the interior of the terminals-receiving part 76), and is ultimately pinched (clamped, squeezed) by the battery-side, positive-electrode terminal 56s, thereby being electrically connected to the battery-side, positive-electrode terminal 56s. The device-side, negative-electrode terminal 258 passes through the slit 90e, enters the interior of the outer case 24, and is ultimately pinched (clamped, squeezed) by the battery-side, negative-electrode terminal 58s, thereby being electrically connected to the battery-side, negative-electrode terminal 58s. The device-side, charging-signal terminal 262f passes through the slit 90c, enters the interior of the outer case 24, and is ultimately pinched (clamped, squeezed) by the battery-side, charging-signal terminal 62f, thereby being electrically connected to the battery-side, charging-signal terminal 62f. The device-side, charging-signal terminal 262s passes through the slit 90d, enters the interior of the outer case 24, and is ultimately pinched (clamped, squeezed) by the battery-side, charging-signal terminal 62s, thereby being electrically connected to the battery-side, charging-signal terminal 62s.

As shown in FIG. 18, each of the battery-side terminals 12 of the battery pack 4 begins to contact the respective device-side terminal 8 of the charger 6 at substantially the same time (or at the same time) during the process of mounting the battery pack 4 on the charger 6. At the timing at which the battery-side terminals 12 begin to contact the device-side terminals 8, the resisting force (specifically, the force resisting the sliding of the battery pack 4 relative to the charger 6) felt by the user sliding the battery pack 4 increases. Hypothetically speaking, if the timings at which each of the battery-side terminals 12 begins to contact the respective device-side terminal 8 were to instead be different from each other, the resisting force would increase in multiple stages while the user is mounting the battery pack 4 on the charger 6. As a result, there is a risk that the user will feel annoyance owing to the user being unable to slide the battery pack 4 smoothly. In the present working example, by contrast, because the timing at which each of the battery-side terminals 12 begin to contact the respective device-side terminals 8 is at least substantially simultaneous (or simultaneous), the likelihood of an increase in the resisting force in multiple stages while the user is mounting the battery pack 4 on the charger 6 is significantly reduced. Therefore, the user is thereby able to smoothly slide the battery pack 4 onto the charger 6 with only one increase in sliding resistance.

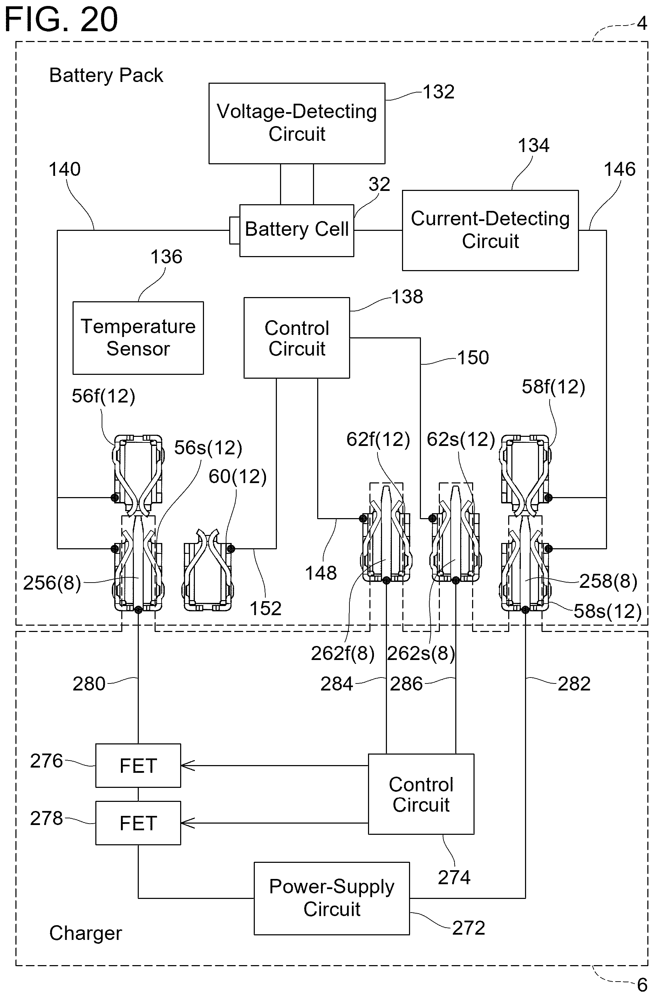

As shown in FIG. 20, the battery pack 4 comprises: a voltage-detecting circuit 132, which detects the voltages of each of the battery cells 32; a current-detecting circuit 134, which detects the currents flowing through each of the battery cells 32; a temperature sensor 136, which detects the temperature of the battery cells 32; a battery-side control circuit 138, which controls the various electrical components of the battery pack 4; a first battery-side, power-supply line 140, which electrically connects the battery cells 32 and the battery-side, positive-electrode terminals 56f, 56s; a second battery-side, power-supply line 146, which electrically connects the battery cells 32 and the battery-side, negative-electrode terminals 58f, 58s; a first battery-side signal line 148, which electrically connects the battery-side control circuit 138 and the battery-side, charging-signal terminal 62f; a second battery-side signal line 150, which electrically connects the battery-side control circuit 138 and the battery-side, charging-signal terminal 62s; and a third battery-side signal line 152, which electrically connects the battery-side control circuit 138 and the battery-side, discharging-signal terminal 60. The voltage-detecting circuit 132, the current-detecting circuit 134, the temperature sensor 136, and the battery-side control circuit 138 are each mounted on the circuit board 36 (see FIG. 6). The value detected by the voltage-detecting circuit 132, the value detected by the current-detecting circuit 134, and the value detected by the temperature sensor 136 are each input to the battery-side control circuit 138.

The charger 6 comprises: a power-supply circuit 272, which is electrically connected to an external power supply (e.g., a commercial AC power supply) by (via) the power-supply cord 212 (see FIG. 14); a device-side control circuit 274, which controls the various electrical component of the charger 6; two switch circuits 276, 278 (e.g., FETs), which turn ON/OFF upon receiving instructions from the device-side control circuit 274; a first device-side, power-supply line 280, which electrically connects the power-supply circuit 272 and the device-side, positive-electrode terminal 256; a second device-side, power-supply line 282, which electrically connects the power-supply circuit 272 and the device-side, negative-electrode terminal 258; a first device-side signal line 284, which electrically connects the device-side control circuit 274 and the device-side, charging-signal terminal 262f; and a second device-side signal line 286, which electrically connects the device-side control circuit 274 and the device-side, charging-signal terminal 262s. Each of the two switch circuits 276, 278 is provided on (in electrical communication with) the first device-side, power-supply line 280 and selectively connects and disconnects the power-supply circuit 272 and the device-side, positive-electrode terminal 256. The power-supply circuit 272, the device-side control circuit 274, and the two switch circuits 276, 278 are each mounted on the circuit board 202 (see FIG. 13).

If a value detected by the voltage-detecting circuit 132 (i.e., the voltage of any one of the battery cells 32) is equal to or greater than a first threshold (e.g., 4.0 V), then the battery-side control circuit 138 outputs, to the first battery-side signal line 148, a first charging-prohibiting signal for prohibiting charging of (conducting current to be supplied to recharge) the battery cells 32. On the other hand, if the value(s) detected by the voltage-detecting circuit 132 is (are all) less than the first threshold, then the battery-side control circuit 138 outputs, to the first battery-side signal line 148, a first charging-permitting signal for permitting charging of (conducting current to be supplied to recharge) the battery cells 32. The first charging-prohibiting signal or the first charging-permitting signal output to the first battery-side signal line 148 is input to the device-side control circuit 274 via the battery-side, charging-signal terminal 62f, the device-side, charging-signal terminal 262f, and the first device-side signal line 284. If the first charging-prohibiting signal is input to the device-side control circuit 274, then the device-side control circuit 274 switches the switch circuit 276 OFF. If the first charging-permitting signal is input to the device-side control circuit 274, then the device-side control circuit 274 switches the switch circuit 276 ON. It is noted that the first threshold is a value that varies depending on the temperature detected by the temperature sensor 136 (i.e., the temperature of the battery cells 32). For example, if the temperature detected by the temperature sensor 136 is high (e.g., higher than 20°C), then the first threshold becomes a larger value (e.g., 4.2 V). If the temperature detected by the temperature sensor 136 is low (e.g., 0°C or lower), then the first threshold becomes a smaller value (e.g., 1.0 V).

If a value detected by the voltage-detecting circuit 132 is equal to or greater than a second threshold (e.g., 4.3 V), then the battery-side control circuit 138 outputs, to the second battery-side signal line 150, a second charging-prohibiting signal for prohibiting charging of (conducting current to be supplied to recharge) the battery cells 32. On the other hand, if the value(s) detected by the voltage-detecting circuit 132 is (are all) less than the second threshold, then the battery-side control circuit 138 outputs, to the second battery-side signal line 150, a second charging-permitting signal for permitting charging of (conducting current to be supplied to recharge) the battery cells 32. The second charging-prohibiting signal or the second charging-permitting signal that is output to the second battery-side signal line 150 is input to the device-side control circuit 274 via the battery-side, charging-signal terminal 62s, the device-side, charging-signal terminal 262s, and the second device-side signal line 286. If the second charging-prohibiting signal is input to the device-side control circuit 274, then the device-side control circuit 274 switches the switch circuit 278 OFF. If the second charging-permitting signal is input to the device-side control circuit 274, then the device-side control circuit 274 switches the switch circuit 278 ON. It is noted that the second threshold is a value not dependent on the temperature detected by the temperature sensor 136.

If the two switch circuits 276, 278 are both turned ON, then charging (conducting current) from the power-supply circuit 272 to the battery cells 32 is permitted, and charging (conducting current) from the power-supply circuit 272 to the battery cells 32 is performed. If at least one of the two switch circuits 276, 278 is turned OFF, then charging (conducting current) from the power-supply circuit 272 to the battery cells 32 is prohibited, and charging (conducting current) from the power-supply circuit 272 to the battery cells 32 is not performed.

### Configuration of Electric Work Machine 16

As shown in FIG. 3, the electric work machine 16 comprises a battery-mounting part 302 for mounting the battery pack 4. The battery-mounting part 302 comprises the slide rails 304, the engaging groove 306, and a terminal block 308, which is provided with the plurality of device-side terminals 18. The slide rails 304 engage with the slide rails 74 of the battery pack 4 (see FIG. 10) in a slidable manner, similarly to the slide rails 216 of the charger 6 (see FIG. 1). The protruding portion 118 of the hook 78 provided on the battery pack 4 (see FIG. 10) engages with the engaging groove 306, similarly to the engaging groove 218 of the charger 6 (see FIG. 1).

The terminal block 308 has the terminal-mounting surface 20, from which the device-side terminals 18 protrude, and a housing part 310, which houses some of the device-side terminals 18, wiring (not shown) for connecting to the device-side terminals 18, and the like. The terminal-mounting surface 20 is located in fourth direction D4 as viewed from (relative to) the housing part 310; i.e. the terminal-mounting surface 20 is located forward of the housing part 310.

Each of the device-side terminals 18 has a sheet shape (rib shape, fin shape) that is (extends) parallel to first direction D1 and second direction D2 in the portions thereof that are exposed to the exterior of the terminal block 308. Each of the device-side terminals 18 comprises: the device-side, positive-electrode terminal 356, which is used for discharging (conducting relatively large currents) from the battery pack 4 to the electric work machine 16; the device-side, negative-electrode terminal 358, which is used for discharging (conducting relatively large currents) from the battery pack 4 to the electric work machine 16; and the device-side, discharging-signal terminal 360, which is used for signal communication (conducting relatively low-current electric signals) between the battery pack 4 and the electric work machine 16.

The terminal block 308 further has the plurality of mating protruding portions 364a, 364e protruding upward from the terminal-mounting surface 20. The mating protruding portion 364a is disposed such that it contacts (and surrounds) the device-side, positive-electrode terminal 356. The mating protruding portion 364e is disposed such that it contacts (and surrounds) the device-side, negative-electrode terminal 358. When the battery pack 4 is mounted on the electric work machine 16, the mating protruding portions 364a, 364e respectively mate with the mating recessed portions 116a, 116e of the battery pack 4, thereby partially blocking off the slits 90a, 90e.

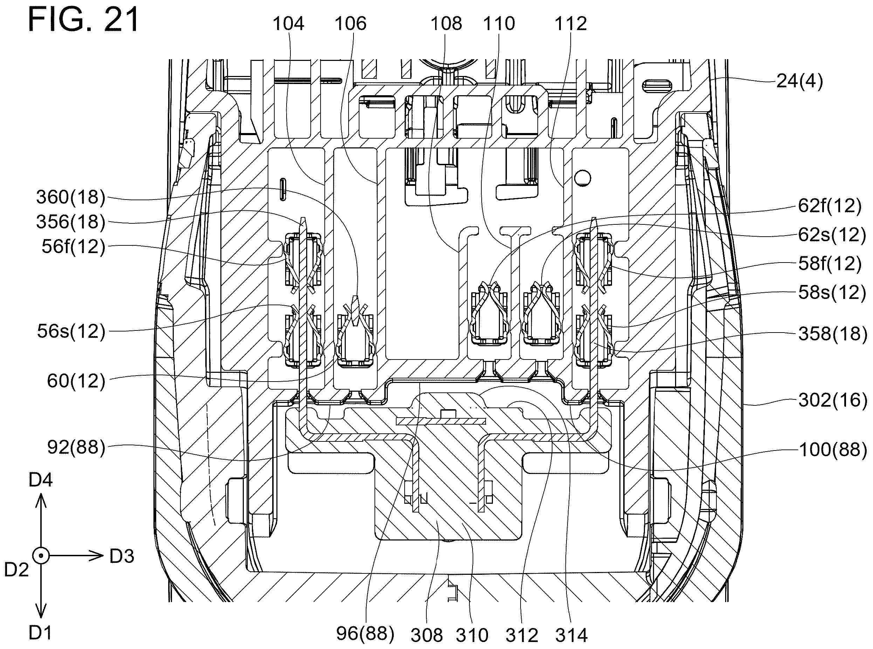

As shown in FIG. 21, the battery pack 4 is mounted on the electric work machine 16 by sliding the battery pack 4 in first direction D1 relative to the electric work machine 16. When mounting the battery pack 4 on the electric work machine 16, each of the device-side terminals 18 of the electric work machine 16 moves in fourth direction D4 relative to the outer case 24 of the battery pack 4. At this time, the device-side, positive-electrode terminal 356 passes through the slit 90a, enters the interior of the outer case 24 (more specifically, the interior of the terminals-receiving part 76), and is ultimately pinched (clamped, squeezed) by the battery-side, positive-electrode terminals 56f, 56s, thereby being electrically connected to the battery-side, positive-electrode terminals 56f, 56s. The device-side, negative-electrode terminal 358 passes through the slit 90e, enters the interior of the outer case 24, and is ultimately pinched (clamped, squeezed) by the battery-side, negative-electrode terminals 58f, 58s, thereby being electrically connected to the battery-side, negative-electrode terminals 58f, 58s. The device-side, discharging-signal terminal 360 passes through the slit 90b, enters the interior of the outer case 24, and is ultimately pinched (clamped, squeezed) by the battery-side, discharging-signal terminal 60, thereby being electrically connected to the battery-side, discharging-signal terminal 60.

When the battery pack 4 is mounted on the battery-mounting part 302, an end surface 312, which faces the housing part 310 of the terminal block 308 in fourth direction D4, opposes the standing wall 88 of the battery pack 4. The housing part 310 has a raised portion 314, which rises from the end surface 312 in fourth direction D4, at a location opposing the second flat-wall portion 96 of the standing wall 88. Hypothetically speaking, if the second flat-wall portion 96 were to instead be flush with the first flat-wall portion 92 and the third flat-wall portion 100, then, if an attempt were to be made to mount the battery pack 4 on the electric work machine 16, the raised portion 314 would interfere with (i.e., make contact with and thereby block) the standing wall 88. For this reason, the battery pack 4 would not be mountable on the electric work machine 16. In the present working example, by contrast, the portion of the standing wall 88 that contacts the second flat-wall portion 96 is recessed in fourth direction D4, and thereby interference of the raised portion 314 with the standing wall 88 can be avoided. For this reason, the battery pack 4 is mountable on the electric work machine 16.

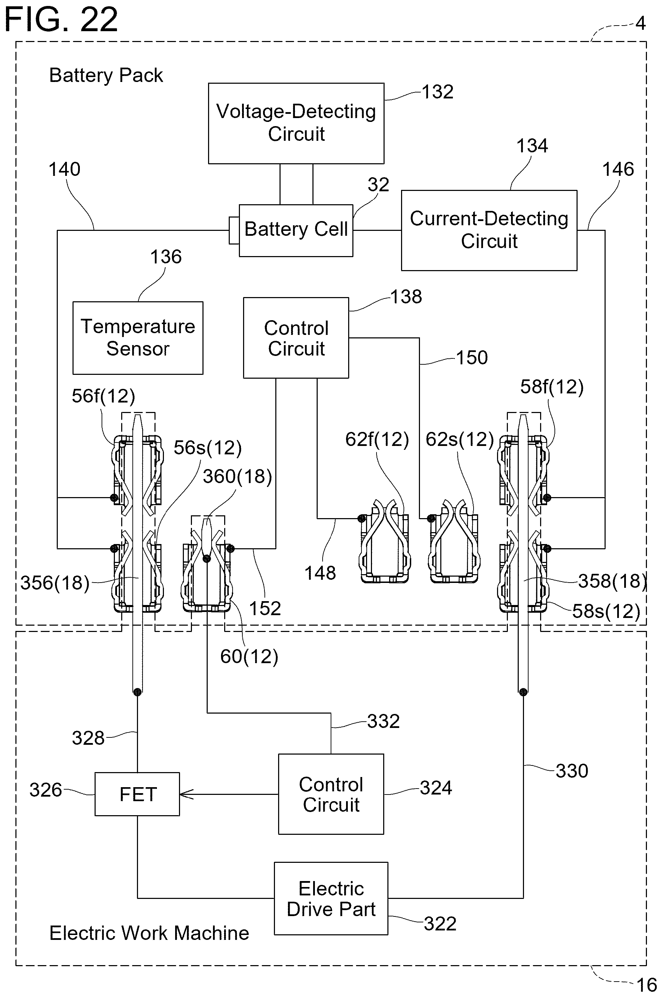

As shown in FIG. 22, the electric work machine 16 comprises: an electric drive part 322 (for example, an electric motor or another electrically-drivable component, such as a heater, a radio, a light, etc.) actuated (driven, energized) by an electric power supply; a device-side control circuit 324 that controls the various electronic components of the electric work machine 16; a switch circuit 326 (e.g., (an) FET(s)) that turns ON/OFF upon receiving instructions from the device-side control circuit 324; a first device-side, power-supply line 328 that electrically connects the electric drive part 322 and the device-side, positive-electrode terminal 356; a second device-side, power-supply line 330 that electrically connects the electric drive part 322 and the device-side, negative-electrode terminal 358; and a device-side signal line 332 that electrically connects the device-side control circuit 324 and the device-side, discharging-signal terminal 360. The switch circuit 326 is provided on the first device-side, power-supply line 328 and selectively connects and disconnects the electric drive part 322 and the device-side, positive-electrode terminal 356.

If a prescribed discharging-permitting condition is met, then the battery-side control circuit 138 outputs, to the third battery-side signal line 152, a discharging-permitting signal for permitting discharging (conducting current) from the battery cells 32 (e.g., to energize the electronic components of the electric work machine 16, such as the electronic drive part 322, etc.). The discharging-permitting conditions include, for example: the value detected by the voltage-detecting circuit 132 (i.e., the voltage of the battery cells 32) being equal to or greater than a prescribed value; the value detected by the current-detecting circuit 134 (i.e., the current flowing through each of the battery cells 32) being equal to or less than a prescribed value; and/or the temperature detected by the temperature sensor 136 being equal to or less than a prescribed value. On the other hand, if a prescribed discharging-prohibiting condition is met, then the battery-side control circuit 138 outputs, to the third battery-side signal line 152, a discharging-prohibiting signal for prohibiting discharging (conducting current) from the battery cells 32. The discharging-prohibiting conditions include, for example: the value detected by the voltage-detecting circuit 132 (i.e., the voltage of the battery cells 32) being less than a prescribed value; the value detected by the current-detecting circuit 134 (i.e., the current flowing through each of the battery cells 32) exceeding a prescribed value; and/or the temperature detected by the temperature sensor 136 exceeding a prescribed value.

The discharging-permitting signal or the discharging-prohibiting signal that is output to the third battery-side signal line 152 is input to the device-side control circuit 324 via the battery-side, discharging-signal terminal 60, the device-side, discharging-signal terminal 360, and the device-side signal line 332. If the discharging-permitting signal is input to the device-side control circuit 324, then the device-side control circuit 324 switches the switch circuit 326 ON. If the switch circuit 326 is turned ON, then discharging (conducting current) from the battery cells 32 to the electric drive part 322 is permitted and operation of the electric drive part 322 is permitted. If the discharging-prohibiting signal is input to the device-side control circuit 324, then the device-side control circuit 324 switches the switch circuit 326 OFF. If the switch circuit 326 is turned OFF, then discharging (conducting current) from the battery cells 32 to the electric drive part 322 is prohibited and operation of the electric drive part 322 is prohibited.

### Modified Examples

The arrangement of the battery-side terminals 12 in the battery pack 4 shown, e.g., in FIGS. 9 and 11, may be modified. For example, the location of the battery-side, positive-electrode terminals 56f, 56s and the location of the battery-side, discharging-signal terminal 60 may be switched. In such a modified embodiment, the slit 90a may receive the device-side terminal corresponding to the battery-side, discharging-signal terminal 60, and the slit 90b may receive the device-side terminals corresponding to the battery-side, positive-electrode terminals 56f, 56s. Alternatively, the location of the battery-side, negative-electrode terminals 58f, 58s and the location of the battery-side, charging-signal terminal 62s may be switched. In such a modified embodiment, the slit 90d may receive the device-side terminals corresponding to the battery-side, negative-electrode terminals 58f, 58s, and the slit 90e may receive the device-side terminal corresponding to the battery-side, charging-signal terminal 62s. Alternatively, the battery-side, discharging-signal terminal 60 may be lined up with the battery-side, charging-signal terminal 62f (or the battery-side, charging-signal terminal 62s) in the front-rear direction (i.e., in first direction D1 and fourth direction D4). In such a modified embodiment, one slit may receive both the device-side terminal corresponding to the battery-side, discharging-signal terminal 60 and the device-side terminal corresponding to the battery-side, charging-signal terminal 62f (or the battery-side, charging-signal terminal 62s). Alternatively, the battery-side, charging-signal terminals 62f, 62s may be lined up in the front-rear direction (i.e., in first direction D1 and fourth direction D4) of the battery pack 4. In such a modified embodiment, one slit may receive the two device-side terminals respectively corresponding to the battery-side, charging-signal terminals 62f, 62s.

The arrangement of the device-side terminals 8 and the device-side terminals 18 may be modified in accordance with the above-described modified arrangements of the battery-side terminals 12.

The battery pack 4 need not comprise one of the battery-side, charging-signal terminals 62f, 62s, as shown, e.g., in FIG. 20. In such a modified embodiment, there may be only one communication path between the battery pack 4 and the charger 6.

Referring to FIG. 9, the respective rear-end locations of the battery-side, charging-signal terminals 62f, 62s may be disposed on sixth virtual axis A6 rather than on seventh virtual axis A7. That is, the respective rear-end locations of the battery-side, charging-signal terminals 62f, 62s may be aligned with the rear-end location of the battery-side, positive-electrode terminal 56s, the rear-end location of the battery-side, discharging-signal terminal 60, and the rear-end location of the battery-side, negative-electrode terminal 58s.

In addition to the mating recessed portions 116a, 116b, 116e as shown, e.g., in FIGS. 10 and 11, the battery pack 4 may further include a recessed portion formed by recessing the upper surface of the front-side flat wall 84 downward around the slit 90c, and/or a recessed portion formed by recessing the upper surface of the front-side flat wall 84 downward around the slit 90d. In such a modified embodiment, the charger 6 may further include protruding portions that mate with the above-mentioned recessed portion added to the battery pack 4. In other words, protruding portions that contact the device-side, charging-signal terminals 262f, 262s may be further provided on the terminal-mounting surface 10 of the charger 6.

The charger 6 need not have at least one of the mating protruding portions 264a, 264b, 264e, as shown, e.g., in FIGS. 1 and 17. In such a modified embodiment, the battery pack 4 need not have at least one of the mating recessed portions 116a, 116b, 116e corresponding to the at least one of the (omitted) mating protruding portions 264a, 264b, 264e.

Referring to FIG. 9, second distance d2 (i.e., the spacing between the battery-side, discharging-signal terminal 60 and the battery-side, charging-signal terminal 62f) may be equal to each of first distance d1, third distance d3, and fourth distance d4 (i.e., the spacings between the other terminals).

Referring to FIGS. 1 and 17, the arrangement of the device-side terminals 8 on the charger 6 may be modified. For example, each of the two device-side, charging-signal terminals 262f, 262s may be disposed in space SR, which is on the right side of virtual plane P2 that bisects, in the left-right direction, the area between the device-side, positive-electrode terminal 256 and the device-side, negative-electrode terminal 258. In addition, the locations of the end portions (ends, edges) of each of the two device-side, charging-signal terminals 262f, 262s in fourth direction D4 may be disposed on eighth virtual axis A8 rather than on ninth virtual axis A9. That is, the locations of the end portions of the two device-side, charging-signal terminals 262f, 262s in fourth direction D4 may be aligned with the location of the end portion of the device-side, positive-electrode terminal 256 in fourth direction D4 and the location of the end portion of the device-side, negative-electrode terminal 258 in fourth direction D4, respectively. Alternatively, the locations of the two device-side, charging-signal terminals 262f, 262s in fourth direction D4 may be offset in first direction D1 with respect to the location of end portion of the device-side, positive-electrode terminal 256 in fourth direction D4 and the location of the end portion of the device-side, negative-electrode terminal 258 in fourth direction D4, respectively.

Furthermore, the charger 6 may comprise three or more device-side, charging-signal terminals. Two of the three or more device-side, charging-signal terminals may be disposed on one side of the space partitioned by virtual plane P2 (i.e., in one of space SL or space SR).

The arrangement of the battery-side terminals 12 and the device-side terminals 18 may be modified in accordance with the above-described modified arrangement of the device-side terminals 8.

### Features of the Working Examples

The charger 6 of the present working example is a charger 6 that is capable of detachably mounting the battery pack 4 that has the battery-side terminals 12. The charger 6 comprises the housing 204 on which the battery pack 4 can be mounted by slidably receiving the battery pack 4 in first direction D1; and the plurality of device-side terminals 8, each having a sheet-shaped structure that is (extends) parallel to first direction D1 and is (extends) parallel to second direction D2 that extends from the battery pack 4 toward the housing 204, and respectively engaging with the battery-side terminals 12 of the battery pack 4 that has been mounted on the housing 104. The device-side terminals 8 include the two charging terminals 256, 258 for charging the battery pack 4 from the charger 6; and the two signal terminals 262f, 262s for signal communication between the charger 6 and the battery pack 4. The two charging terminals 256, 258 are spaced apart from each other in third direction D3 that is orthogonal to first direction D1 and second direction D2. Each of the two signal terminals 262f, 262s is disposed on one side SL of a space between the two charging terminals 256, 258 that is divided by virtual plane P2 that bisects the space in third direction D3.

As was explained above, chargers, which have a plurality of device-side terminals arranged at approximately equal intervals, are generally available such as the charger disclosed in US 2011-181243. On the other hand, in the above-described configuration of the present working example, the two signal terminals 262f, 262s are disposed near the device-side, negative-electrode terminal 258 (example of "one charging terminal" according to the present teachings). The device-side, positive-electrode terminal 256 (example of another "charging terminal" according to the present teachings) is disposed at a position remote (spaced apart) from the other device-side terminals (i.e., the device-side, negative-electrode terminal 258 and the two signal terminals 262f, 262s). Therefore, the layout of the device-side terminals 8 clearly differs from the layout of the device-side terminals of generally available chargers (i.e., chargers, which have a plurality of device-side terminals arranged at approximately equal intervals). Thereby, the lack of compatibility between a charger 6 of the present working example and a generally available charger is visually ascertainable from the differences in their appearances. Therefore, according to the above-mentioned configuration, a charger 6, in which it can be easily determined whether it is compatible with other chargers, can be realized.

In the above-described working example, the locations (A8) of the end portions (ends, edges) of each of the two charging terminals 256, 258 in fourth direction D4 are aligned in fourth direction D4 that is opposite to first direction D1. The locations (A9) of the end portions (ends, edges) of each of the two signal terminals 262f, 262s in fourth direction D4 are offset in one of first direction D1 and fourth direction D4 from the locations (A8) of the end portions (ends, edges) of each of the two charging terminals 256, 258 in fourth direction D4.

According to the above-mentioned configuration, the locations of the two signal terminals 262f, 262s are offset in first direction D1 (or fourth direction D4) relative to the locations of the two charging terminals 256, 258. As a result, it becomes easier for the user to visually distinguish between the signal terminals 262f, 262s and the charging terminals 256, 258.

In the above-described working example, the locations (A9) of the end portions (ends, edges) of each of the two signal terminals 262f, 262s in fourth direction D4 are offset in fourth direction D4 relative to the locations (A8) of each of the end portions (ends, edges) of the two charging terminals 256, 258 in fourth direction D4.

According to the above-mentioned configuration, the locations of the two signal terminals 262f, 262s are offset in fourth direction D4 relative to the locations of the two charging terminals 256, 258. As a result, it becomes easier for the user to visually distinguish between the signal terminals 262f, 262s and the charging terminals 256, 258.

In the above-described working example, the housing 204 includes the terminal-mounting surface 10 on which the device-side terminals 8 are provided and which opposes the battery pack 4 mounted on the housing 204; and the protruding portions 264a, 264b, 264e that protrude from the terminal-mounting surface 10 toward the battery pack 4. Each of the two charging terminals 256, 258 protrudes toward the battery pack 4 from the portions of the terminal-mounting surface 10 where the protruding portions 264a, 264b, 264e are provided. Each of the two signal terminals 262f, 262s protrudes toward the battery pack 4 from the portions of the terminal-mounting surface 10 where the protruding portions 264a, 264b, 264e are not provided.

According to the above-mentioned configuration, the terminals that protrude from the portions of the terminal mounting surface 10 where the protruding portions 264a, 264b, 264e are provided can be visually identified as the charging terminals 256, 258, and the terminals that protrude from the portions of the terminal mounting surface 10 where the protruding portions 264a, 264b, 264e are not provided can be visually identified as the signal terminals 262f, 262s. As a result, it becomes easier for the user to visually distinguish between signal terminals 262f, 262s and charging terminals 256, 258.

As was noted above, the housing 204 includes the terminal-mounting surface 10 on which the device-side terminals 8 are provided and which opposes the battery pack 4 mounted on the housing 204; and the protruding portions 264a, 264b, 264e that protrude from the terminal-mounting surface 10 toward the battery pack 4. Each of the two signal terminals 262f, 262s protrudes toward the battery pack 4 from the portions of the terminal-mounting surface 10 where the protruding portions 264a, 264b, 264e are not provided. In the above-described working example, the protruding portion 264b (example of "at least one protruding portion" according to the present teachings) is arranged such that it does not contact any one of the device-side terminals 8 on the opposite side SR of the space divided by virtual plane P2.

According to the above-mentioned configuration, a battery pack 4 having the recessed portions 116a, 116b, 116e corresponding to the protruding portions 264a, 264b, 264e can be mounted on the charger 6. On the other hand, if it is attempted to mount a battery pack (not shown) that does not have the recessed portions 116a, 116b, 116e corresponding to the protruding portions 264a, 264b, 264e on the charger 6, the battery pack cannot be mounted on the charger 6 because the protruding portions 264a, 264b, 264e interfere with (block) the battery pack. Thereby, battery packs, which are not suitable for being recharged by the charger, are impeded from (blocked) being mounted on the charger 6.

Another charger 6 disclosed herein is a charger 6 that is capable of detachably mounting the battery pack 4 that has the battery-side terminals 12. The charger again comprises the housing 204 on which the battery pack 4 can be mounted by slidably receiving the battery pack in prescribed first direction D1; and the plurality of device-side terminals 8, each having a sheet-shaped structure that is (extends) parallel to first direction D1 and is (extends) parallel to second direction D2 that extends from the battery pack 4 toward the housing, and respectively engaging with the battery-side terminals 12 of the battery pack 4 that has been mounted on the housing 204. The device-side terminals 8 includes the two charging terminals 256, 258 for charging the battery pack 4 from the charger 6; and the two signal terminals 262f, 262s for signal communication between the charger 6 and the battery pack 4. The housing 204 includes the terminal-mounting surface 10 on which the device-side terminals 8 are provided and which opposes the battery pack 4 mounted on the housing 204; and the protruding portions 264a, 264b, 264e that protrude from the terminal-mounting surface 10 toward the battery pack 4. Each of the two charging terminals 256, 258 protrude toward the battery pack 4 from the portions of the terminal-mounting surface 10 where the protruding portions 264a, 264b, 264e are provided. Each of the two signal terminals 262f, 262s protrudes toward the battery pack 4 from the portions of the terminal-mounting surface 10 where the protruding portions 264a, 264b, 264e are not provided.

According to the above-mentioned configuration, the terminals that protrude from the portions of the terminal mounting surface 10 where the protruding portions 264a, 264b, 264e are provided can be visually identified as the charging terminals 256, 258, and the terminals that protrude from the portions of the terminal mounting surface 10 where the protruding portions 264a, 264b, 264e are not provided can be visually identified as the signal terminals 262f, 262s. As a result, it becomes easier for the user to visually distinguish between the signal terminals 262f, 262s and the charging terminals 256, 258.

Another charger 6 disclosed herein is a charger 6 that is capable of detachably mounting the battery pack 4 having the battery-side terminals 12. The charger again comprises the housing 204 on which the battery pack 4 can be mounted by slidably receiving the battery pack 4 in prescribed first direction D1; and the plurality of device-side terminals 8, each having a sheet-shaped structure that is parallel to first direction D1 and is parallel to second direction D2 that extends from the battery pack 4 toward the housing 204, and respectively engaging with the battery-side terminals 12 of the battery pack 4 that has been mounted on the housing 204. The device-side terminals 8 include the two charging terminals 256, 258 for charging the battery pack 4 from the charger 6; and the two signal terminals 262f, 262s for signal communication between the charger 6 and the battery pack 4. The housing 204 includes the terminal-mounting surface 10 on which the device-side terminals 8 are provided and which opposes the battery pack 4 mounted on the housing 204; and the protruding portions 264a, 264b, 264e that protrude from the terminal-mounting surface 10 toward the battery pack 4. Each of the two signal terminals 262f, 262s protrudes toward the battery pack 4 from the portions of the terminal-mounting surface 10 where the protruding portions 264a, 264b, 264e are not provided. The protruding portion 264b (example of at least one protruding portion) is arranged such that it does not contact any one of the device-side terminals 8.

According to the above-mentioned configuration, a battery pack 4 having the recessed portions 116a, 116b, 116e corresponding to the protruding portions 264a, 264b, 264e can be mounted on the charger 6. On the other hand, if it is attempted to mount a battery pack (not shown) that does not have the recessed portions 116a, 116b, 116e corresponding to the protruding portions 264a, 264b, 264e on the charger 6, the battery pack cannot be mounted on the charger 6 because the protruding portions 264a, 264b, 264e interfere with (block) the battery pack. Thereby, battery packs, which are not suitable for being recharged by the charger, are impeded from (blocked) being mounted on the charger 6.

## Claims

1. A charger (6) capable of detachably mounting a battery pack (4) having battery-side terminals (12), comprising:
a housing (204) on which the battery pack is mountable by slidably receiving the battery pack in a first direction (D1);
a plurality of device-side terminals (8), each having a sheet-shaped structure that extends parallel to the first direction and extends parallel to a second direction (D2) that extends from the battery pack toward the housing when the battery pack is mounted on the charger, and respectively adapted to engage with the battery-side terminals of the battery pack that has been mounted on the housing;
wherein:
the plurality of device-side terminals include:
two charging terminals (256, 258) adapted to supply charging current from the charger to the battery pack; and
two signal terminals (262f, 262s) adapted to communicate electric signals between the charger and the battery pack;
the two charging terminals are spaced apart from each other in a third direction (D3) that is orthogonal to the first direction and the second direction; and
each of the two signal terminals is disposed on one side (SL) of a space between the two charging terminals that is divided by a virtual plane (P2) that bisects the space in the third direction.

2. The charger according to claim 1, wherein:
the housing (204) includes:
a terminal-mounting surface (20) on which the device-side terminals (8) are provided and which opposes the battery pack (4) when the battery pack has been mounted on the housing; and
a plurality of protruding portions (264a, 264b, 264e) that protrude from the terminal-mounting surface toward the battery pack when the battery pack has been mounted on the housing.

3. The charger according to claim 2, wherein:
each of the two charging terminals (256, 258) protrudes toward the battery pack from the portion(s) of the terminal-mounting surface where the protruding portions are provided, and/or
each of the two signal terminals (262f, 262s) protrudes toward the battery pack from the portion(s) of the terminal-mounting surface where the protruding portions are not provided, and/or
at least one of the protruding portions (264b) is arranged such that it does not contact any one of the device-side terminals (256) on the opposite side (SR) of the space divided by the virtual plane (P2).

4. The charger according to claim 2 or 3, wherein:
the plurality of protruding portions include:
a first protruding portion (264a) surrounding and contacting a first one (256) of the two charging terminals (256, 258);
a second protruding portion (264e) surrounding and contacting a second one (258) of the two charging terminals (256, 258); and
a third protruding portion (264b) that does not contact any of the device-side terminals.

5. The charger according to claim 4, wherein:
the first one (256) of the two charging terminals with the first protruding portion (264a) is disposed along a first virtual axis (A1) parallel to the first direction (D1);
the third protruding portion (264b) is disposed along a second virtual axis (A2), which is parallel to the first direction and offset by a first distance (d1) from the first virtual axis in the third direction (D3);
a first one (262f) of the two signal terminals is disposed along a third virtual axis (A3), which is parallel to the first direction and offset by a second distance (d2) from the second virtual axis in the third direction;
a second one (262s) of the two signal terminals is disposed along a fourth virtual axis (A4), which is parallel to the first direction and offset by a third distance (d3) from the third virtual axis in the third direction; and
the second one (258) of the two charging terminals with the second protruding portion (264e) is disposed along a fifth virtual axis (A5), which is parallel to the first direction and is offset by a fourth distance (d4) from the fourth virtual axis in the third direction;
the first distance, the third distance, and the fourth distance are equal to each other; and
the second distance is greater than each of the first distance, the third distance, and the fourth distance.

6. The charger according to claim 5, wherein the second distance (d2) is equal to or greater than two times each of the first distance (d1), the third distance (d3), and the fourth distance (d4).

7. The charger according to any one of claims 1 to 6, wherein:
the locations (A8) of the end portions of each of the two charging terminals (256, 258) in a fourth direction (D4), which is opposite to the first direction (D1), are aligned in the fourth direction; and
the locations (A9) of the end portions of each of the two signal terminals (262f, 262s) in the fourth direction are offset in one of the first direction (D1) and the fourth direction from the locations (A8) of the end portions of each of the two charging terminals in the fourth direction.

8. The charger according to any one of claims 1 to 6, wherein the locations (A9) of the end portions of each of the two signal terminals (262f, 262s) in a fourth direction (D4), which is opposite to the first direction (D1), are offset in the fourth direction relative to the locations (A8) of the end portions of each of the two charging terminals in the fourth direction.
